# EUROPEAN PATENT SPECIFICATION

(11) **EP 2 481 911 B1**
(45) Date of publication and mention of the grant of the patent: **01.10.2014**
(21) Application number: 11152300.7
(22) Date of filing: 27.01.2011
(51) Int. Cl.: F03B 13/26

(54) **Tidal power generating module and tidal power generating method using the same**
Gezeitenstromerzeugungsmodul und Gezeitenstromerzeugungsverfahren dafür
Module de génération d'énergie marémotrice et procédé de génération d'énergie marémotrice l'utilisant

(43) Date of publication of application: 01.08.2012
(73) Proprietor: Jung Suk, Kim, Samhyang-Myeon, Muan-Gun, Jeollanam-Do (KR); Sam Kwang Special Machinery Co., Ltd., Samhyang-Myeon, Muan-Gun, Jeollanam-Do (KR)
(72) Inventor: Jung Suk, Kim, Samhyang-Myeon, Muan-Gun, Jeollanam-Do (KR); Young Ho, Jeon, Samhyang-Myeon, Muan-Gun, Jeollanam-Do (KR); Young Gyun, Jeon, Samhyang-Myeon, Muan-Gun, Jeollanam-Do (KR)
(74) Representative: Hano, Christian

(56) References cited:
- BE-A- 375 452
- DE-U1-202005 006 122
- US-A- 2 484 183
- US-A1- 2008 197 632

## Description

### BACKGROUND OF THE INVENTION

### Field of the Invention

The present invention relates to a tidal power generating module and a tidal power generating method using the same, and, more particularly, to a tidal power generating module that is capable of continuously generating power using compressed air and weight of seawater even at high tide and low tide at which the level of the seawater is not fluctuated in addition to the vertical movement of a vertical movement unit due to the rise and fall of the tide and a tidal power generating method using the same.

### Description of the Related Art

In recent years, various substitute energy sources have attracted considerable attention together with interest in environment as fossil fuel has exhausted. In particular, research has been conducted on methods of using natural energy which does not induce environmental pollution and can be stably obtained.

One of such methods is tidal power generation. A dam is constructed at a position where the difference between the rise and fall of the tide is great. A water gate of the dam is closed at rising tide, and, when the water gate is opened, a turbine of a generator is rotated by water to generate power. At falling tide, the turbine of the generator is rotated in the reverse direction to generate power.

The tidal power generation, which obtains clean energy, has the effect of estimating power capacity to be generated based on estimation of the difference between the rise and fall of the tide. In particular, the difference between the rise and fall of the tide is great in the Yellow sea of Korea, which is suitable for tidal power generation.

In conventional tidal power generating methods, however, it is necessary to construct a dam. As a result, the initial construction costs are very high, it is difficult to maintain the dam. Also, a large-sized artificial structure is constructed at the bottom of the sea with the result that an ecosystem is badly affected. Also, it is not possible to generate power at high tide and low tide at which the level of the seawater is not fluctuated. As a result, it is not possible to smoothly supply a necessary amount of power at a desired time zone and to arbitrarily adjust the generation amount of power.

US 2008/0197632 A1 discloses an air-blower tidal power generation device including a rack, an air-blower mechanism, and a power generation mechanism. The air-blower mechanism includes a pumping device, a buoy, and an air conduit. The pumping device includes a cylinder and a stationary barrel movably coupled together. The power generation mechanism includes a constant-pressure and pressure-regulation device and a power generator having an air-driven turbine. Thus, tides move the buoy up and down to drive the pumping device for cyclically drawing and pumping air, and the air is preserved in the constant-pressure and pressure-regulation device to provide a constant pressure for subsequent and stable supply of airflow to the turbine for driving the power generator to generate power.

Another prior art example can be found in BE375452.

The present invention has been made in view of the above problems, and it is an object of the present invention to provide a tidal power generating module that is capable of economically and stably generating power using tidal force, which is a permanent energy source, and a tidal power generating method using the same.

It is another object of the present invention to provide a tidal power generating module that is capable of continuously generating power using compressed air and weight of seawater even at high tide and low tide at which the level of the seawater is not fluctuated in addition to the vertical movement of a vertical movement unit due to the rise and fall of the tide and a tidal power generating method using the same.

It is a further object of the present invention to provide a tidal power generating module which is not permanently constructed on the sea but is moved and fixed to a position where tidal power generation is possible so as to generate power, and rises to the surface of the sea and is moved when tidal power generation is not necessary, whereby it is possible to reduce initial construction costs of the tidal power generating module, to greatly reduce damage to a submarine ecosystem, and to easily repair and maintain the tidal power generating module, and a tidal power generating method using the same.

These objects are achieved by a tidal power generating module comprising the features of claim 1. Preferred embodiments of the tidal power generating module of the present invention are claimed in claims 2 to 12.

A tidal power generating method using the tidal power generating module according to claim 5 is claimed in claim 13. Preferred ways to carry out the method of the invention are claimed in claims 14 to 16.

### BRIEF DESCRIPTION OF THE DRAWINGS

The above and other objects, features and other advantages of the present invention will be more clearly understood from the following detailed description taken in conjunction with the accompanying drawings, in which:

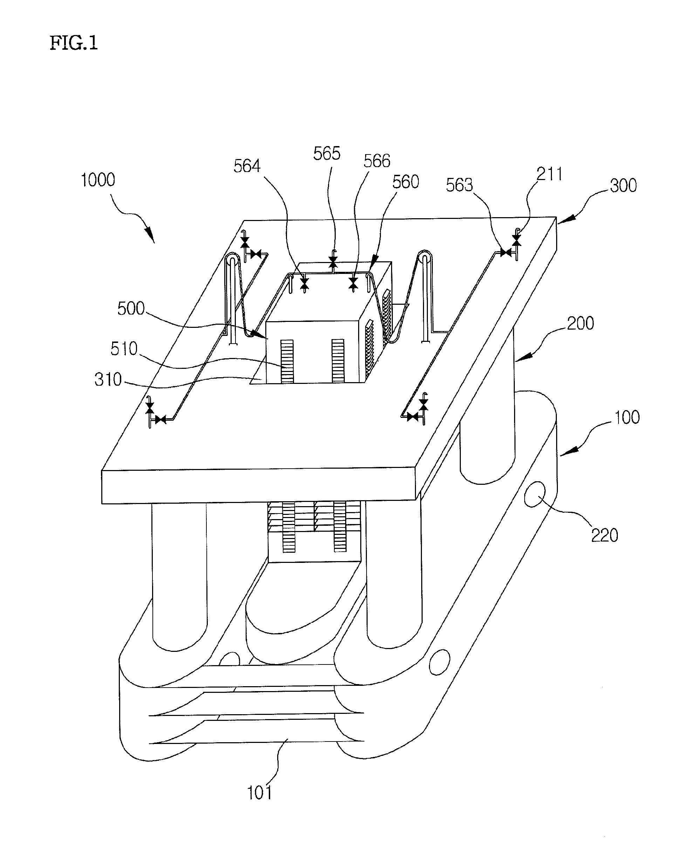

FIG. 1 is a perspective view illustrating a tidal power generating module according to an embodiment of the present invention;

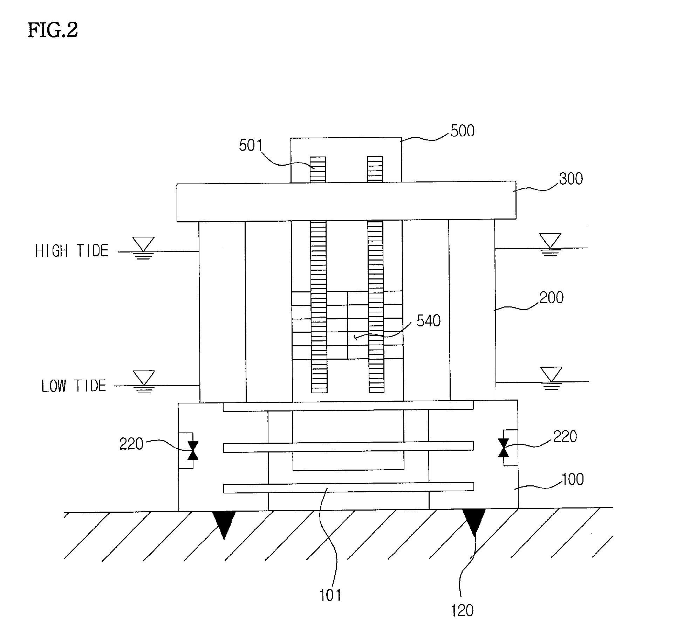

FIG. 2 is a schematic side view of the tidal power generating module according to the embodiment of the present invention;

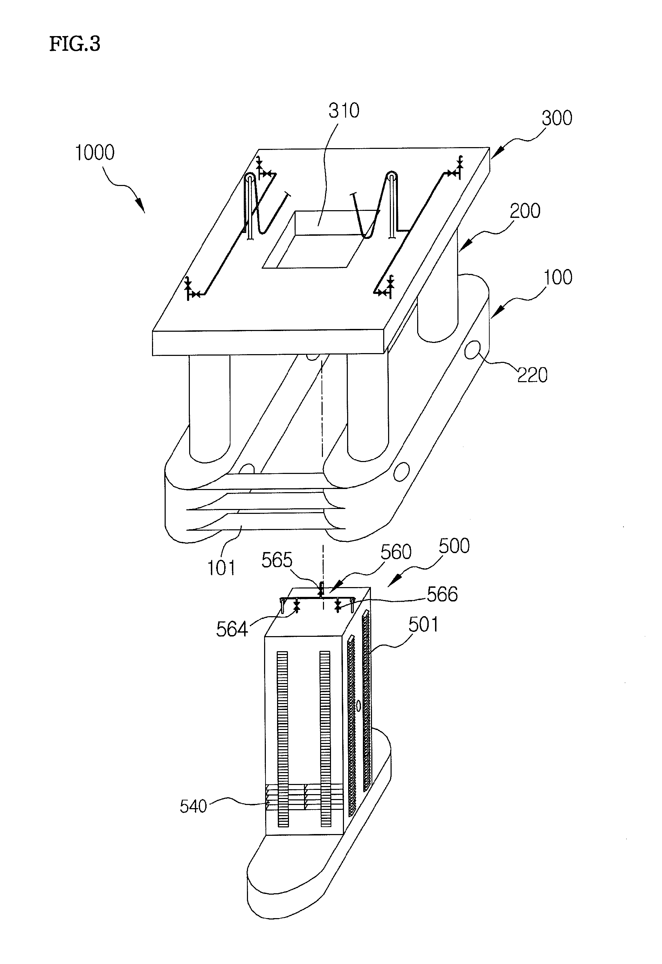

FIG. 3 is an exploded perspective view of the tidal power generating module according to the embodiment of the present invention;
FIG. 4 is a perspective view illustrating lower structures according to an embodiment of the present invention;
FIGS. 5A and 5B are schematic side sectional views of a compressed air forming tank and a power generation unit of the tidal power generating module according to the embodiment of the present invention, illustrating that the compressed air forming tank forms compressed air using tidal force at low tide and at high tide, respectively;
FIG. 6 is a view illustrating an upper structure according to an embodiment of the present invention;

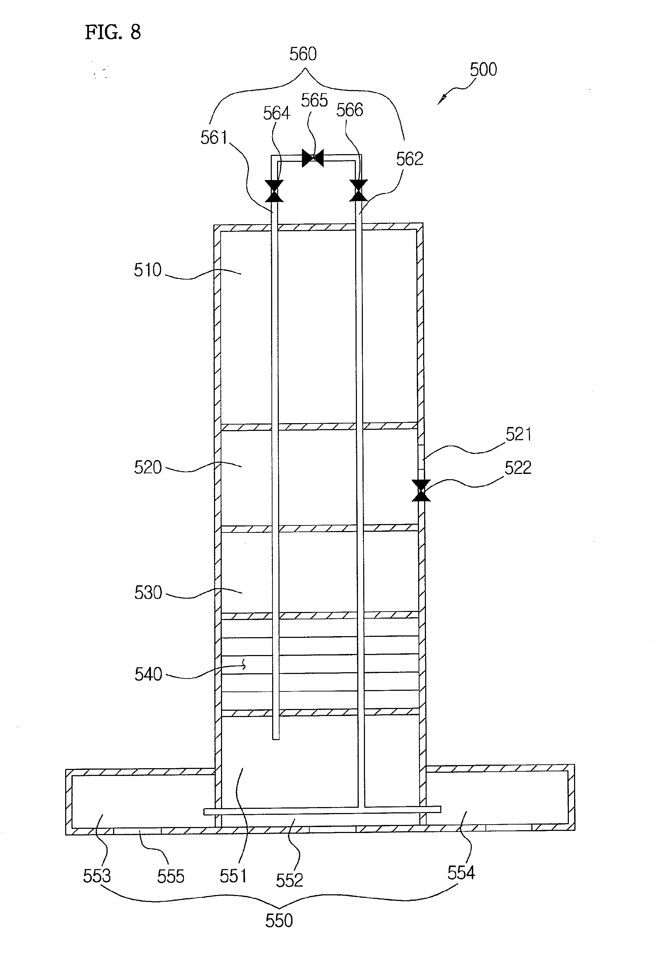

FIGS. 7 and 8 are perspective and schematic sectional views respectively illustrating a vertical movement unit according to an embodiment of the present invention;
FIG. 9 is a view illustrating the movement of the seawater from the compressed air forming tank of the tidal power generating module according to the embodiment of the present invention to a space part of the vertical movement unit;
FIG. 10 is a schematic view illustrating conversion of vertical movement of the vertical movement unit according to the embodiment of the present invention into rotational motion of the power generation unit;
FIGS. 11 and 12 are front views of the tidal power generating module according to the embodiment of the present invention at low tide and at high tide, respectively;
FIGS. 13A and 13B are views illustrating other types of compressed air forming tanks of the tidal power generating module according to the embodiment of the present invention to form high-pressure compressed air, wherein FIG. 13A is a view illustrating a basic example of a compressed air forming tank and FIG. 13B is a view illustrating an application example of a compressed air forming tank;

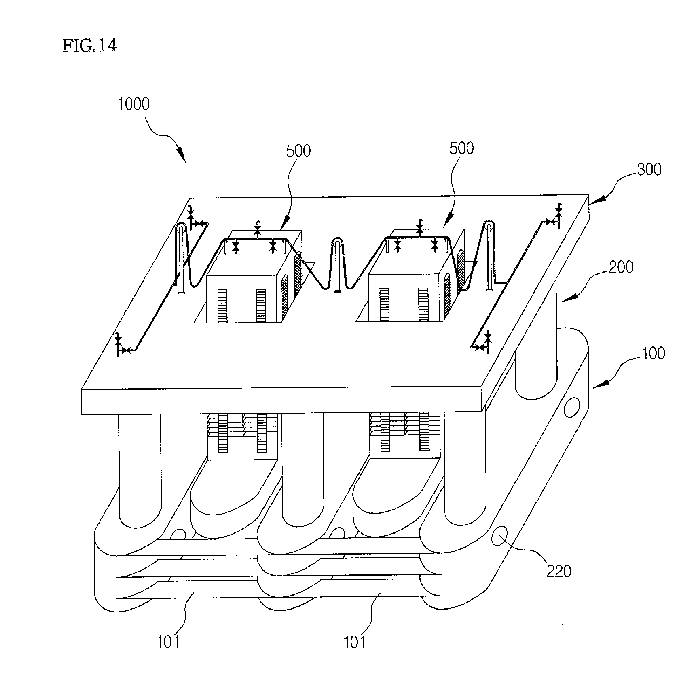

FIG. 14 is a perspective view of a tidal power generating module according to another embodiment of the present invention;
FIG. 15 is a view illustrating the interior of each of the lower structures;
FIG. 16 is a flow chart illustrating a tidal power generating method according to an embodiment of the present invention;
FIG. 17 is a schematic view illustrating a continuous power generation execution example of the tidal power generating method according to the embodiment of the present invention (vertical axis H indicates the level of the tide and horizontal axis t indicates time); and
FIGS. 18 and 19 are views illustrating wind power generating apparatuses installed at the tidal power generating modules according to the embodiments of the present invention, respectively.

### DETAILED DESCRIPTION OF THE INVENTION

Now, preferred embodiments of the present invention will be described in detail with reference to the accompanying drawings.

First, the overall construction of a tidal power generating module 1000 according to an embodiment of the present invention will be described in detail. Generally, the tidal power generating module 1000 may include lower structures 100, compressed air forming tanks 200, an upper structure 300, a vertical movement unit 500, and a power generation unit 400.

### <Construction and operation of lower structures 100>

The lower structures 100 are a part to support the remaining parts of the tidal power generating module 1000 at the lower side of the tidal power generating module 1000. In this embodiment, a pair of lower structures 100 is provided so that the lower structures 100 are spaced apart from each other by a predetermined distance. The lower structures 100 are connected to each other via connection members 101. An anchor 120 is mounted to the bottom of each of the lower structures 100 to fix each of the lower structures 100 to the bottom of the sea.

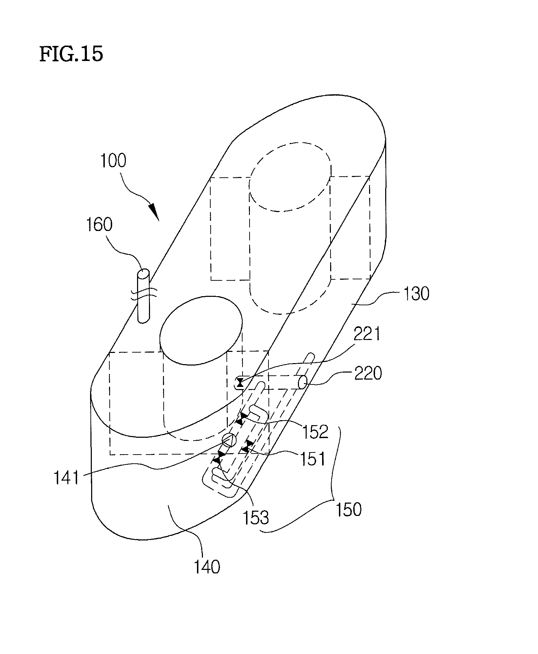

In particular, a seawater ballast tank 130 (see FIG. 15) is formed in each of the lower structures 100 to store or discharge seawater. Also, a transfer unit 150 to transfer seawater from the seawater ballast tank 130 so that the seawater is discharged to the outside and a discharge pump 141 to discharge seawater stored in the seawater ballast tank 130 to the outside are mounted in each of the lower structures 100. The lower structures 100 are configured so as to rise to the surface of the seawater.

A guide channel of the seawater ballast tank 130 communicates with a seawater introduction and discharge unit 220 connected to the lower end of a corresponding one of the compressed air forming tanks 200. A first transfer valve 151 is provided in the guide channel so that the first transfer valve 151 is opened or closed to adjust the introduction of the seawater through the seawater introduction and discharge unit 220. In addition to the first transfer valve 151, the transfer unit 150 further includes a second transfer valve 152 disposed at the front end of the discharge pump 141 and a third transfer valve 153 disposed at the rear end of the discharge pump 141.

In order to discharge seawater, therefore, the discharge pump 142 is driven in a state in which the second transfer valve 152 and the third transfer valve 153 are opened while the first transfer valve 151 is closed with the result that the seawater is forcibly discharged through the seawater introduction and discharge unit 220.

Also, an air introduction and discharge unit 160 communicating with external air above the upper structure 300 may be formed at one side of the seawater ballast tank 130 so that air is introduced into and discharged from the seawater ballast tank 130 through the air introduction and discharge unit 160 upon discharging the seawater from the seawater ballast tank 130.

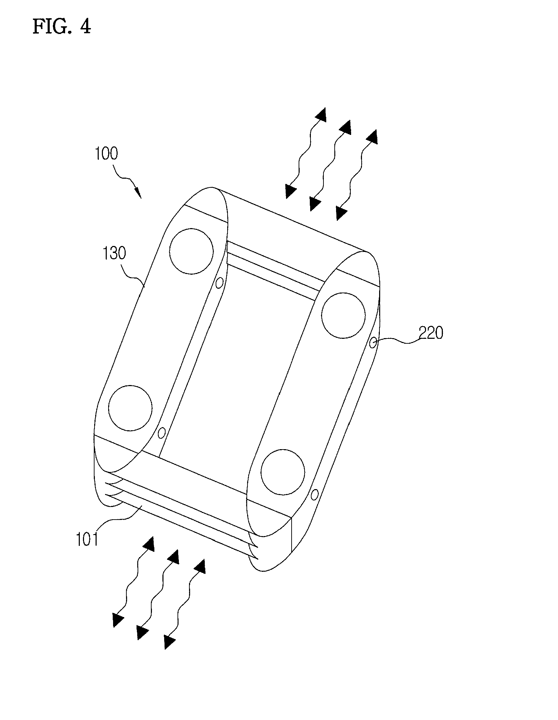

As shown in FIG. 4, the lower structures 100 are arranged in parallel to the tidal current direction, and the lower structures 100 are fixedly connected to each other by the connection members 101. In FIG. 4, arrows indicate the tidal current direction.

In addition to connection between the lower structures 100, the connection members 101 have the following function. When wave height of the tidal current is high, the connection members 101 reduce the wave height of the tidal current flowing therebetween so that the tidal current flows in the vicinity of the vertical movement unit 500 horizontally.

When no seawater is stored in the seawater ballast tank 130, each of the lower structures 100 with the above-stated construction remains floating on the seawater like a vessel. When seawater is introduced into the seawater ballast tank 130, each of the lower structures 100 moves to the bottom of the sea and is fixed to the bottom of the sea by the anchor 120. During power generation, the seawater remains stored in the seawater ballast tank 130.

Meanwhile, it is necessary to inspect or repair the tidal power generating module according to an embodiment of the present invention on land or to disuse the tidal power generating module according to an embodiment of the present invention. In this case, seawater is discharged out of the seawater ballast tank 130 using the discharge pump 141, which is mounted in a pump compartment 140, and the transfer unit 150 so that buoyancy is applied to the seawater ballast tank 130. As a result, the tidal power generating module 1000 may rise to the surface of the seawater and may be towed by a towing vessel.

In conclusion, the tidal power generating module 1000 according to the embodiment of the present invention is moved to the bottom of the sea at a position where it is necessary to generate power, is fixed to the bottom of the sea, and generates power. When it is necessary to move the tidal power generating module 1000, seawater is discharged from the seawater ballast tank 130 of each of the lower structures 100 so that the tidal power generating module 1000 rises to the surface of the seawater. Consequently, it is possible to considerably reduce construction costs necessary to install power generation utilities at the bottom of the sea and to prevent damage to a submarine ecosystem.

### <Construction and operation of compressed air forming tanks 200>

In this embodiment, four compressed air forming tanks 200 are provided to independently supply compressed air through selective opening and closing control of sixth valves 563 mounted in supply channels of the respective compressed air forming tanks 200. Each of the compressed air forming tanks 200 is formed in the shape of a column having a predetermined height. Each of the compressed air forming tanks 200 is vertically mounted at the upper part of a corresponding one of the lower structures 100. The number and shape of the compressed air forming tanks 200 may be variously adjusted to stably support the lower structures 100 and the upper structure 300.

An air introduction and discharge unit 210 and a seawater introduction and discharge unit 220 are formed at the upper part and the lower part of each of the compressed air forming tanks 200, respectively, so that air and seawater are selectively stored in the inner space of each of the compressed air forming tanks 200. Compressed air is formed in each of the compressed air forming tanks 200 according to the fluctuation of the surface of the seawater.

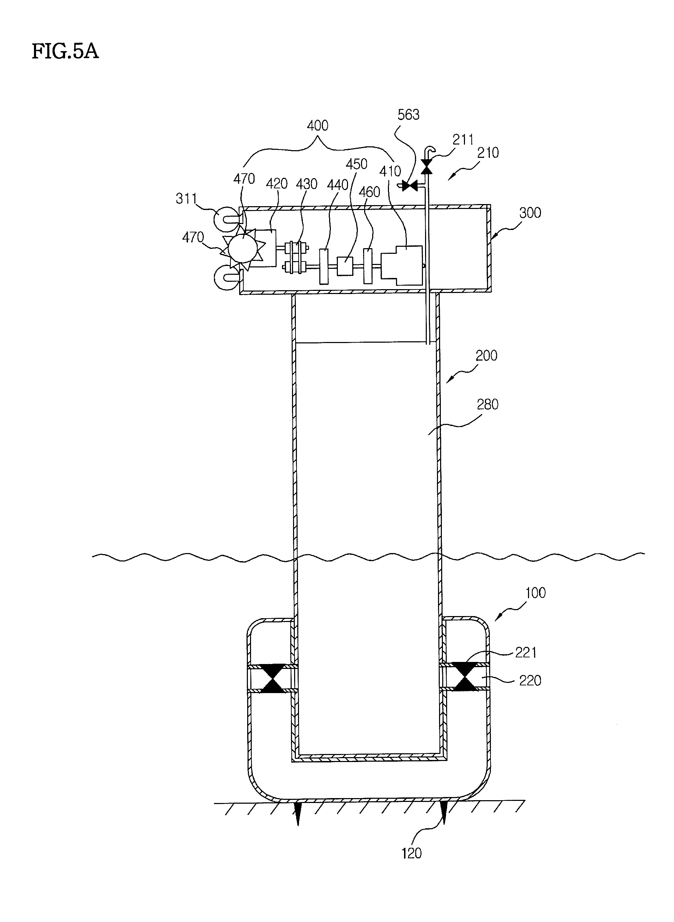

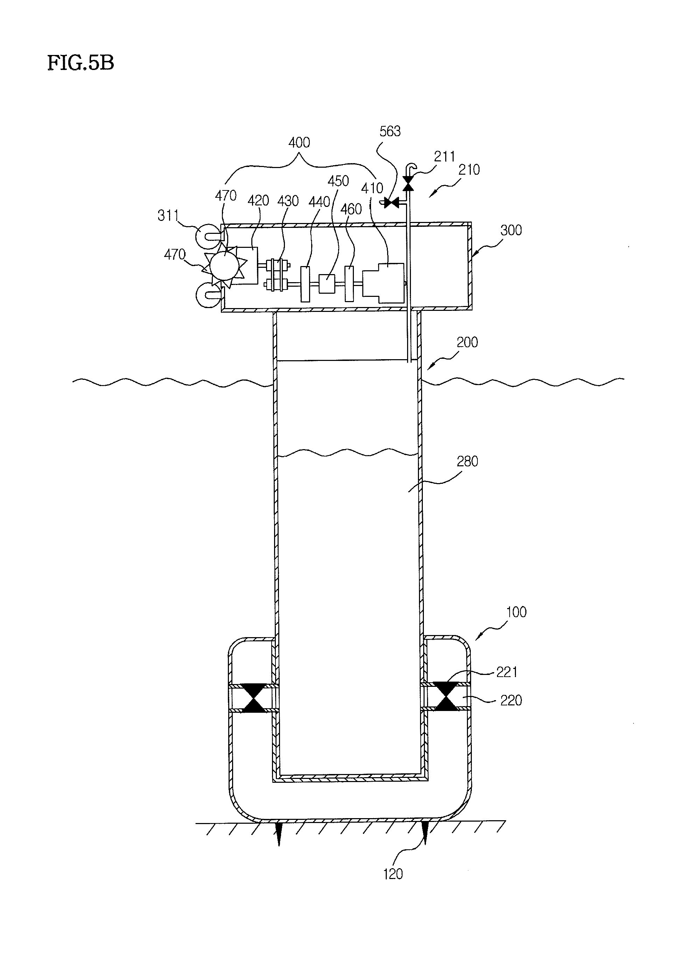

The air introduction and discharge unit 210 communicates with external air above each of the compressed air forming tanks 200 to adjust the introduction and discharge of air. The air introduction and discharge unit 210 may be formed in various shapes. For example, as shown in FIGS. 5A and 5B, opening and closing of the air introduction and discharge unit 210 are controlled by a second valve 211 so that air is introduced and discharged through the air introduction and discharge unit 210.

The seawater introduction and discharge unit 220 is bored through a corresponding one of the lower structures 100 at the lower side of each of the compressed air forming tanks 200. Opening and closing of the seawater introduction and discharge unit 220 may be controlled by a third valve 221.

Referring to FIG. 5A, both the air introduction and discharge unit 210 and the seawater introduction and discharge unit 220 are open (both the second valve 211 and the third valve 221 are open) with the result that both air and seawater are simultaneously contained in each of the compressed air forming tanks 200. The pressure of internal air is equal to the atmospheric pressure, and the level of the seawater contained in each of the compressed air forming tanks 200 remains equal to the surface of the seawater.

At rising tide, on the other hand, the air introduction and discharge unit 210 is closed and the seawater introduction and discharge unit 220 is opened (the second valve 211 is closed and the third valve 221 is opened) with the result that pressure corresponding to water head due to rise of the level of the seawater is applied to the air contained in each of the compressed air forming tanks 200, and therefore, compressed air is formed in each of the compressed air forming tanks 200, as shown in FIG. 5B.

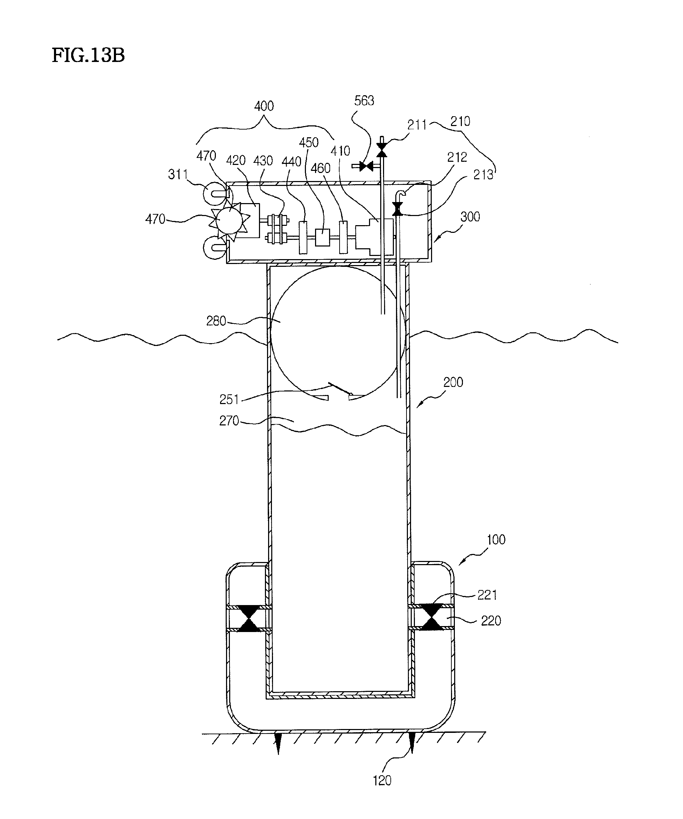

That is, the compressed air is formed using pressure based on the fluctuation of the surface of the seawater. The compressed air may be formed by simply controlling opening and closing of the air introduction and discharge unit 210 and the seawater introduction and discharge unit 220 without an additional electrical operation. (Each of the compressed air forming tanks 200 may be classified as an example of forming high-pressure compressed air using a multi-stage piston 260 or another example of forming compressed air having low pressure than the high-pressure compressed air. In the example of forming the low-pressure compressed air, a compressed air forming space defined in each of the compressed air forming tanks 200 is shown as a low-pressure tank 280 in FIG. 13B. The example of forming the high-pressure compressed air will be described below.)

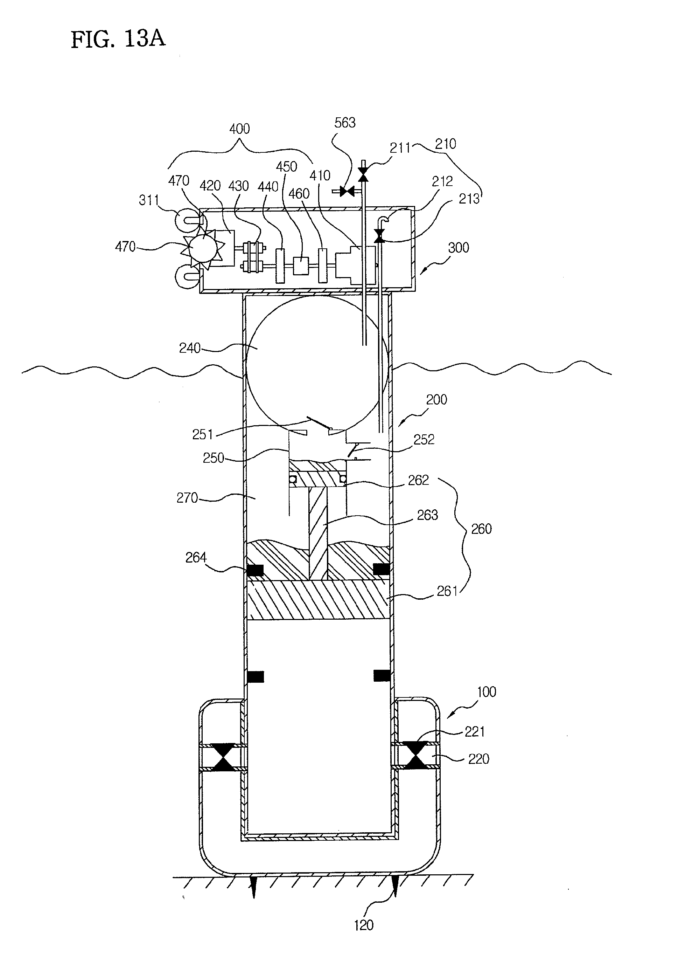

That is, as shown in FIG. 13A, a high-pressure tank 240, a cylinder 250 and a piston 260 is disposed in each of the compressed air forming tanks 200 to form compressed air having higher pressure than water pressure due to water head caused by the difference between the rise and fall of the tide.

Water head pressure of tidal force is uniformly provided according to the rise and fall of the surface of the seawater. In the tidal power generating module 1000 according to the embodiment of the present invention, high-pressure compressed air is formed using the piston 260 including movement parts having different areas (the area of a first movement part 261 > the area of a second movement part 262), thereby further increasing a compression degree of the compressed air.

More specifically, the high-pressure tank 240 is a space to store high-pressure compressed air. The high-pressure tank 240 is disposed independently in each of the compressed air forming tanks 200 at the upper side thereof. The air introduction and discharge unit 210, which includes a second valve 211 and an atmospheric air introduction part 212 having an atmospheric air introduction valve 213, is disposed above the high-pressure tank 240. The air introduction and discharge unit 210 is connected to an air supply unit 560 to supply compressed air to a space part 550 defined in the vertical movement unit 500.

The cylinder 250 is disposed below the high-pressure tank 240. The cylinder 250 includes a first control valve 251 to control communication between the cylinder 250 and the high-pressure tank 240, a second control valve 252 to control communication between the cylinder 250 and an atmospheric air storage unit 270, and an atmospheric air introduction part 212.

The sectional area of the cylinder 250 is smaller than the sectional area of each of the compressed air forming tanks 200 so that the cylinder 250 forms a space in which the dual piston 260 is movable together with each of the compressed air forming tanks 200.

The dual piston 260 includes a first movement part 261 configured to be moved vertically according to the introduction and discharge of the seawater into and from each of the compressed air forming tanks 200, a rod 263 extending from the center of the first movement part 261 to a position where the cylinder 250 is formed so that the rod 263 has a predetermined height, and a second movement part 262 provided above the rod 263. The second movement part 262 has a smaller area than the first movement part 261. The second movement part 262 is disposed in the cylinder 250.

Upper and lower restricting parts 264 to restrict the vertical movement of the first movement part 261 may be formed in each of the compressed air forming tanks 200.

The high-pressure compressed air is formed using a principle in which pressure at the upper side is increased in proportion to the difference in area between the first movement part 261 and the second movement part 262 of the piston 260.

More specifically, at falling tide, the piston 260 is moved downward due to the fall of the surface of the seawater and weight of the dual piston, and the atmospheric air introduction valve 213 of the air introduction and discharge unit 210 and the second valve 252 are opened with the result that air is introduced into the cylinder 250.

On the other hand, at rising tide, the second valve 211 of the air introduction and discharge unit 210 and the sixth valve 563 are closed, and piston 260 is moved upward according to the rise of the surface of the seawater to compress air. At this time, the second control valve 252 is closed and the first control valve 251 is opened with the result that high-pressure compressed air is stored in the high-pressure tank 240.

The high-pressure compressed air stored in the high-pressure tank 240 is supplied into the space part 550 of the vertical movement unit 500 via the air introduction and discharge unit 210 and the air supply unit 560.

Also, a nonpolluting lubricant may be supplied to the top of the first movement part 261 of the piston 260 and the top of the second movement part 262 of the piston 260 so as to reduce friction between the piston 260 and the cylinder 250.

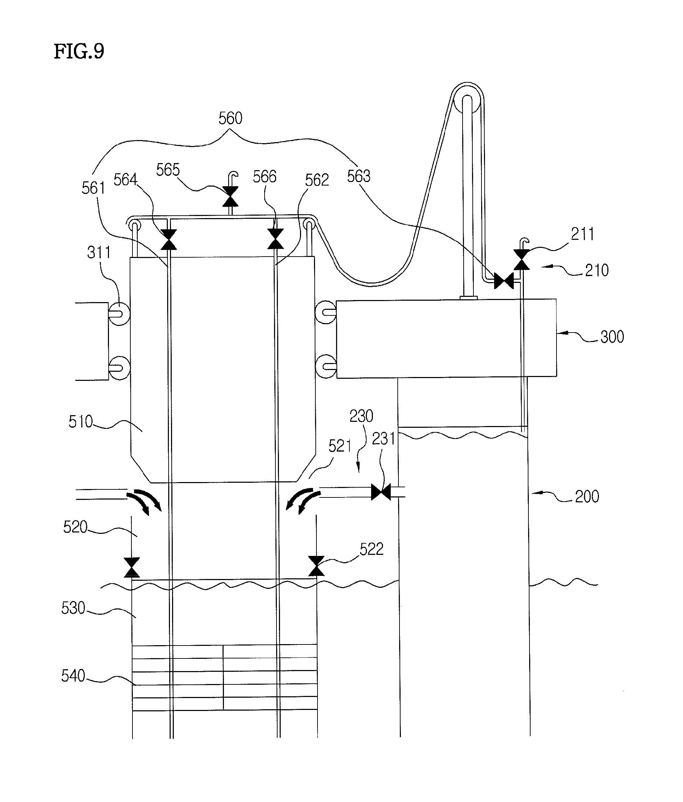

Meanwhile, as shown in FIG. 9, each of the compressed air forming tanks 200 includes a seawater supply part 230 to supply seawater into a seawater storage part 520 of the vertical movement unit 500 through a communication hole 521 in a state in which the seawater is stored in each of the compressed air forming tanks 200 at high tide.

The seawater supply part 230 is opened when it is necessary to supply seawater stored in each of the compressed air forming tanks 200 at high tide to supply the seawater to the vertical movement unit 500. A fourth valve 231 is formed in the seawater supply part 230 to control the supply of the seawater.

Also, the seawater supply part 230 may be formed in the shape of a bellows pipe having an adjustable length and may be connected to the communication hole 521 so as to stably supply seawater although the height of the vertical movement unit 500 is changed.

### <Construction and operation of upper structure 300>

In this embodiment, the upper structure 300 is disposed above the compressed air forming tanks 200 so that the upper structure 300 is located above the surface of the seawater at high tide. The upper structure 300 has a hollow part 310 formed in the center thereof.

The hollow part 310 is a space through which the vertical movement of the vertical movement unit 500 is guided. The hollow part 310 may be formed in various shapes, such as a polygon and a circle, so as to correspond to the sectional shape of the vertical movement unit 500.

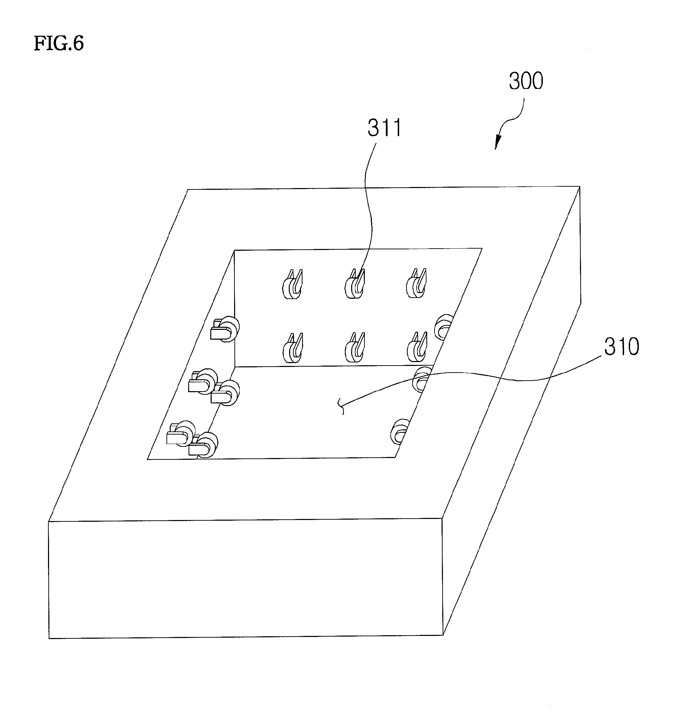

As shown in FIG. 6, the hollow part 310 of the upper structure 300 may be provided at the inside thereof contacting the vertical movement unit 500 with idle rollers 311 to guide vertical movement of the vertical movement unit 500.

The upper structure 300 with the above-stated construction controls the height of the compressed air forming tanks 200 so that upper structure 300 is located at a higher position than the level of the seawater at high tide.

### <Construction and operation of power generation unit 400>

In this embodiment, the power generation unit 400 is disposed in the upper structure 300 to convert the vertical movement of the vertical movement unit 500 into rotational motion, thereby generating power.

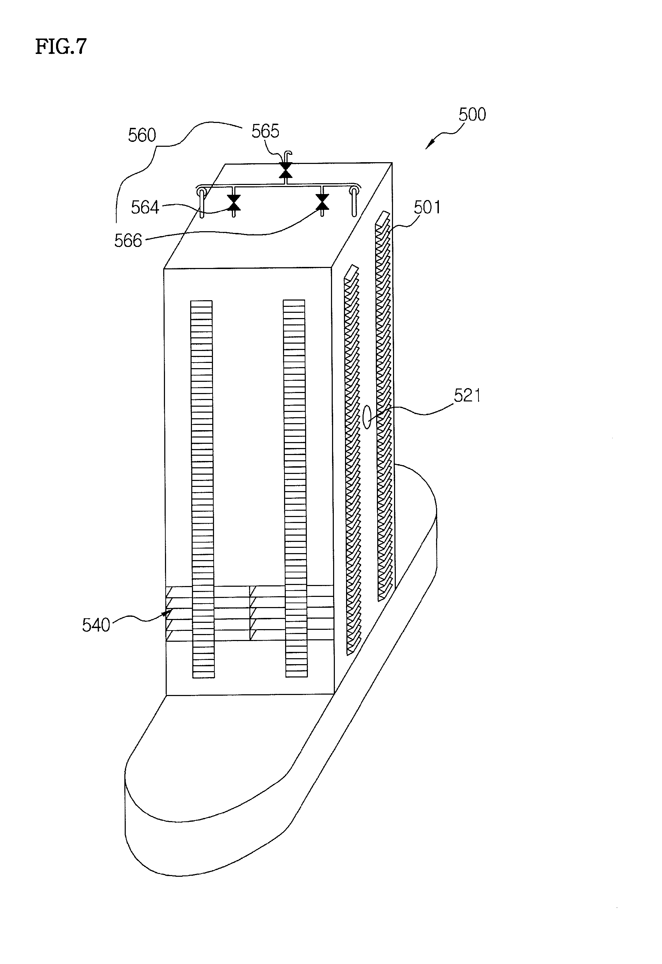

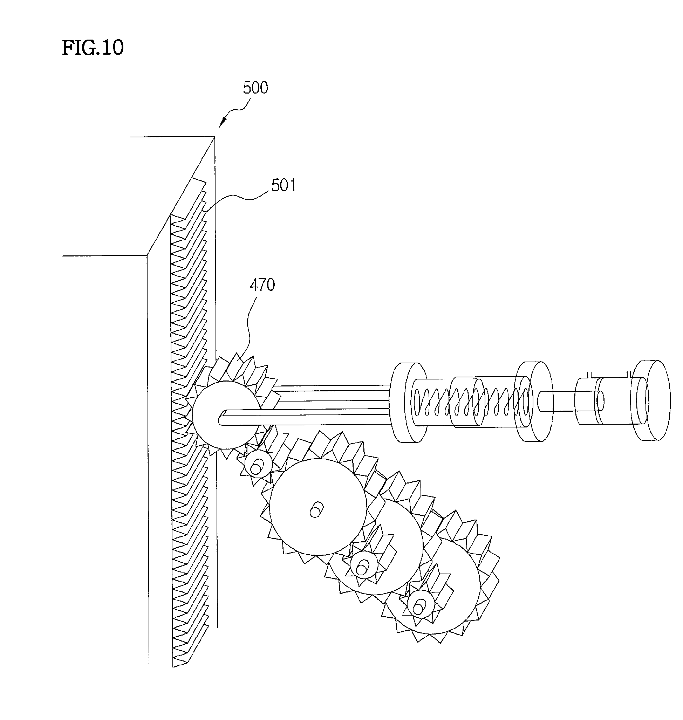

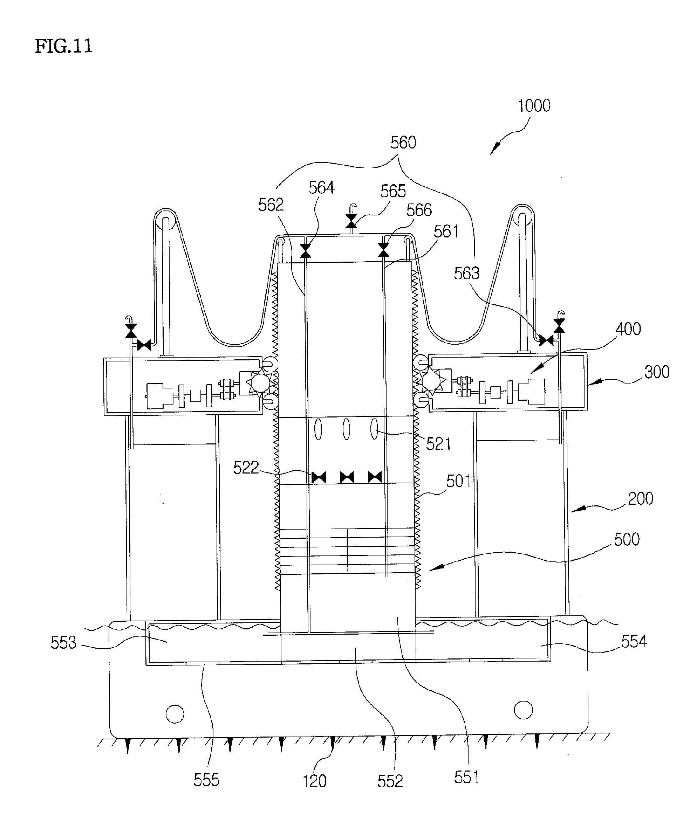

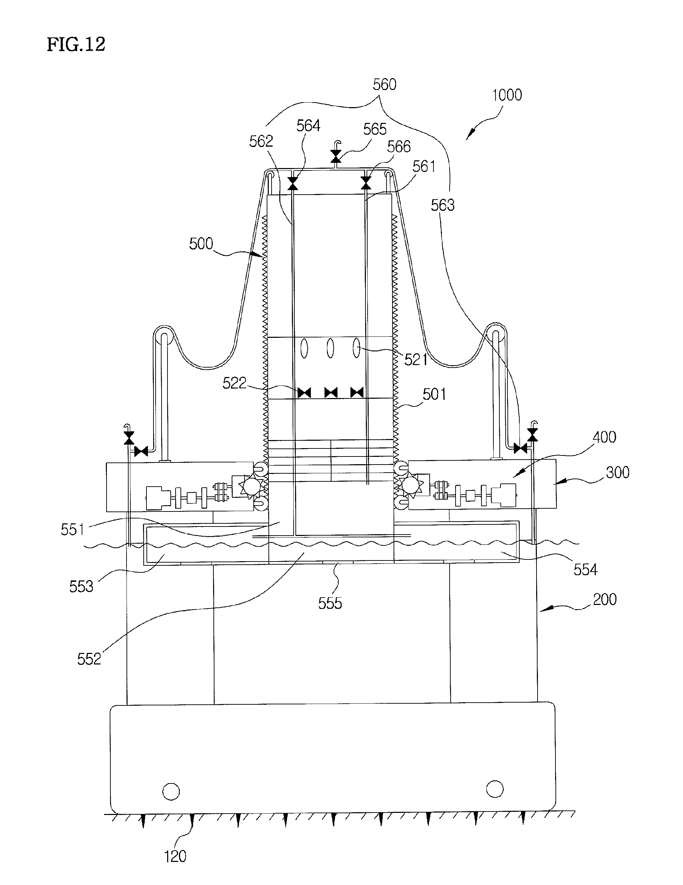

That is, as shown in FIGS. 5A, 5B, 7, 10, 11 and 12, the power generation unit 400 includes a generator 410, a compression type pinion gear 470 rotatably engaged with a rack gear 501 formed at the side of the vertical movement unit 500, a gearbox 420 to increase rotational force of the compression type pinion gear 470, and a first flywheel 440 and a second flywheel 460 to uniform rotational speed.

That is, the compression type pinion gear 470 is engaged with the rack gear 501 to convert the vertical movement of the vertical movement unit 500 into rotational motion. Rotational energy of the compression type pinion gear 470 is transmitted to the generator 410 via the gearbox 420, a pulley belt 430, the first flywheel 440, a rotational direction conversion type clutch 450 and the second flywheel 460 so that power is generated by the generator 410.

The gear box 420 increases rotational speed of the pinion gear 470 to a rotational speed at which power can be generated. The pulley belt 430 prevents the occurrence of overspeed rotation.

The first flywheel 440 is a device to accumulate rotational force of the gearbox 420 idling while the downward or upward movement speed of the vertical movement unit 500 is changed from low speed to high speed at low tide and at high tide, thereby achieving smooth connection between the gearbox 420 and the rotational direction conversion type clutch 450. The first flywheel 440 is formed so as to have a size sufficient to store rotational energy.

The rotational direction conversion type clutch 450 has an adjustable gear the rotational direction of which can be converted in the forward rotational direction or in the reverse rotational direction at low tide and at high tide at which the vertical movement of the vertical movement unit 500 is converted.

The second flywheel 460 enables power to be generated using accumulated rotational energy until the clutch 450 is reconnected when the clutch 450 is disconnected to convert the rotational direction.

### <Construction and operation of vertical movement unit 500>

In this embodiment, the vertical movement unit 500 is a structure which is supported by the hollow part 310 of the upper structure 300 so that the vertical movement unit 500 can be vertically moved according to the difference between the rise and fall of the tide.

The vertical movement unit 500 is provided at the middle part thereof with a seawater storage part 520. The vertical movement unit 500 is provided at the lower part thereof with a space part 550. The vertical movement unit 500 is provided at the upper part thereof with a height forming part 510. An air storage part 530 and seawater movement parts 540 are provided between the seawater storage part 520 and the space part 550.

Weight of the seawater or buoyancy generated by compressed air is applied to the seawater storage part 520 and the space part 550 or the buoyancy applied to the seawater storage part 520 and the space part 550 is removed as the result of discharge of the compressed air even at high tide and at low tide at which the level of the seawater is not fluctuated with the result that the vertical movement unit 500 is moved in addition to the movement of the vertical movement unit 500 due to the rising tide and the falling tide.

In particular, the seawater storage part 520 is a space into which seawater from each of the compressed air forming tanks 200 is supplied via the seawater supply part 230 with the result that additional weight of the seawater is selectively applied to the seawater storage part 520. The seawater storage part 520 is provided at the upper part of one side thereof with a communication hole 521 through which seawater from the seawater supply part 230 is supplied into the seawater storage part 520. The seawater storage part 520 is provided at the lower part of one side thereof with a fifth valve 522 to discharge seawater.

Also, the space part 550 is a space to store compressed air and seawater. The space part 550 is provided at the bottom thereof with an opening 555 through which seawater is introduced into and stored in the space part 550 in a normal state. The compressed air is formed by the operation of the air introduction and discharge unit 210 and the seawater introduction and discharge unit 220 of each of the compressed air forming tanks 200 and tidal force. The air supply unit 560 is connected to the air introduction and discharge unit 210 so that the compressed air is transferred to the space part 550.

The air supply unit 560 may include a hose communicating with the air introduction and discharge unit 210, four sixth valves 563 provided adjacent to the air introduction and discharge unit 210 to control the movement of compressed air, an eighth valve 566, a seventh valve 564 provided at the upper side of the vertical movement unit 500 to control the supply of compressed air into the space part 550, and a discharge valve 565 to control the discharge of compressed air in the space part 550 to the outside.

That is, when compressed air is not supplied into the space part 550 or when compressed air from the space part 550 is discharged to the outside, seawater is introduced into and stored in the space part 550. As a result, the vertical movement unit 500 is moved downward due to weight of the seawater. On the other hand, when compressed air is supplied into the space part 550 through the air supply unit 560, the seawater is discharged from the space part 550 by the compressed air with the result that buoyancy is applied to the space part 550, and therefore, the vertical movement unit 500 is moved upward.

In particular, the space part 550 includes a first space part 551 provided below the seawater movement parts 540, a second space part 552 provided below the first space part 551 so as to communicate with the first space part 551, and a third space part 553 and a fourth space part 554 horizontally provided at opposite sides of the second space part 552. The second space part 552 is provided at the bottom thereof with an opening 555. Also, the third space part 553 is provided at the bottom thereof with an opening 555. Also, the fourth space part 554 is provided at the bottom thereof with an opening 555.

That is, the first space part 551 and the second space part 552 communicate with compressed air and seawater. The compresses air is introduced into the first space part 551 and is moved into the second space part 552. On the other hand, the seawater is introduced into the second space part 552 and is moved into the first space part 551.

Also, the third space part 553 and the fourth space part 554 are provided at the opposite sides of the second space part 552. Preferably, the third space part 553 and the fourth space part 554 are provided at the opposite sides of the second space part 552 in the tidal current direction so as not to disturb the flow of the tidal current.

The air supply unit 560 includes a first air supply part 561 to supply compressed air to the first space part 551 and the second space part 552 and a second air supply part 562 to supply compressed air to the third space part 553 and the fourth space part 554. The supply of compressed air into the first space part 551, the second space part 552, the third space part 553 and the fourth space part 554 is individually controlled to adjust buoyancy or gravity applied to the vertical movement unit 500 in multiple stages.

In addition, the third space part 553 and the fourth space part 554 prevent the vertical movement unit 500 from being separated from the hollow part 310 of the upper structure 300 when the vertical movement unit 500 is moved to the highest position.

In this embodiment, the height forming part 510 has a predetermined height so that the height forming part 510 protrude above the top of the upper structure 300 so as to communicate with external air when the vertical movement unit 500 is moved to the lowest position. The height forming part 510 functions as preliminary buoyancy for emergency when the vertical movement unit 500 falls or is at other different critical moments. The vertical movement unit 500 is not moved downward to the bottom of the sea but rises to the surface of the seawater by the provision of the height forming part 510.

The air storage part 530 is a part to store air to provide a predetermined level of buoyancy to the lower side of the seawater storage part 520. The air storage part 530 is permanently sealed to provide buoyancy offsetting weight of the vertical movement unit 500.

Each of the seawater movement parts 540 is formed in the shape of a plate. The seawater movement parts 540 are stacked vertically and are horizontally fixed to the bottom of the air storage part 530 so that seawater flows between the seawater movement parts 540. Seawater forms laminar flow when the seawater flows between the seawater movement parts 540. Consequently, the seawater movement parts 540 act as gravity without generation of buoyancy when the vertical movement unit 500 is submerged below the surface of the seawater to easily move the vertical movement unit 500 downward. It is necessary for members to fix the seawater movement parts 540 to be formed so as not to disturb flow of the tidal current.

Meanwhile, in this embodiment, the valves to open and close the respective flow channels may be individually controlled in a wired or wireless fashion.

Hereinafter, the operation of the tidal power generating module with the above-stated construction according to the embodiment of the present invention will be described in detail.

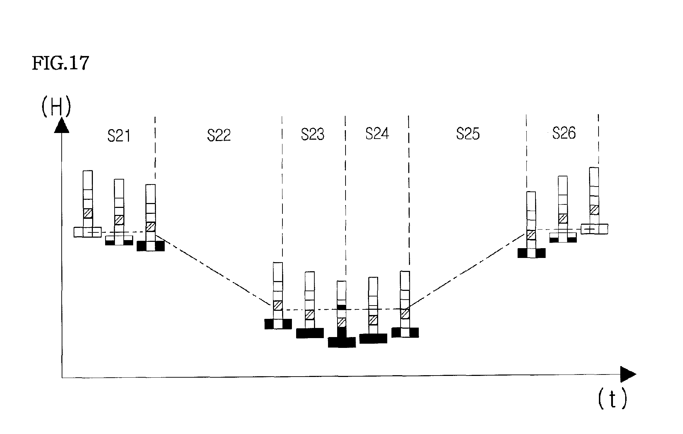

FIG. 17 is a schematic view illustrating an example of a tidal power generating method according to an embodiment of the present invention. The vertical movement unit 500 is schematically shown based on the level of the seawater, and the seawater stored in the vertical movement unit 500 is shown black. Since the seawater movement parts 540, which are the fourth component of the vertical movement unit 500 from top, are region continuously acting as load, the seawater movement parts 540 are shown as oblique lines. Compressed air is stored in the region which is not shown black of the seawater storage part 520 and the space part 550 of the vertical movement unit 500.

As shown in FIG. 17, the tidal power generating method according to the embodiment of the present invention includes a first power generation step (S21) to a sixth power generation step (S26). The first power generation step (S21) to the sixth power generation step (S26) are repeatedly performed.

First, the first power generation step (S21) is a step at which seawater is introduced into the third space part 553 and the fourth space part 554 so that the vertical movement unit 500 is moved downward to generate power at high tide at which the surface of the seawater is located at the highest position after the tide has risen.

At this time, the sixth valve 563 is closed to prevent compressed air from moving backward to each of the compressed air forming tanks 200. When an operator controls the seventh valve 564 and the discharge valve to be opened in a wired or wireless fashion, seawater is introduced into the third space part 553 and the fourth space part 554, in which compressed air is stored, through the respective openings 555 with the result that the air is discharged out of the third space part 553 and the fourth space part 554, and therefore, buoyancy is reduced. Consequently, first downward movement of the vertical movement unit 500 is performed.

The second power generation step (S22) is a step at which the surface of the seawater is lowered as the tide falls with the result that second downward movement of the vertical movement unit 500 is performed to generate power. At this step, the amount of the compressed air and the seawater in the vertical movement unit 500 remains equal to the amount of the compressed air and the seawater in the vertical movement unit 500 at the final state of the first power generation step (S21).

The third power generation step (S23) is a step at which seawater is introduced into the first space part 551, the second space part 552 and the seawater storage part 520 so that the vertical movement unit 500 is further moved downward to generate power through the power generation unit 400 at low tide at which the surface of the seawater is located at the lowest position. At this time, the sixth valve 563 is closed to prevent compressed air from moving backward to each of the compressed air forming tanks 200. The eighth valve 566 and the discharge valve 565 are opened so that the compressed air in the first space part 551 and the second space part 552 is discharged to the outside. Consequently, seawater is introduced into the first space part 551 and the second space part 552 through the respective openings 555 with the result that buoyancy of the vertical movement unit 500 is further reduced. In addition, the fourth valves 231 of the seawater supply parts 230 of two of the compressed air forming tanks 200 are opened so that the seawater stored in each of the compressed air forming tanks 200 to a predetermined level is transferred to and stored in the seawater storage part 520 of the vertical movement unit 500 through the communication hole 521 as shown in FIG. 9.

Consequently, the seawater is naturally introduced into the first space part 551 and the second space part 552 as the compressed air is discharged from the first space part 551 and the second space part 552 with the result that buoyancy is removed from the vertical movement unit 500. Also, the fourth valve 231 of the seawater supply part 230 is opened so that seawater is introduced into the seawater storage part 520 through the communication hole 521, and therefore, the vertical movement unit 500 is moved downward due to the increase of load thereof.

Meanwhile, the fourth power generation step (S24) is a step at which the seawater is discharged out of the first space part 551 and the second space part 552 by compressed air supplied from one of the two compressed air forming tanks 200 which have not been operated to supply seawater at the third power generation step (S23) and, at the same time, the fifth valve 522 of the seawater storage part 520 is opened to discharge the seawater out of the seawater storage part 520 with the result that the vertical movement unit 500 is slowly moved upward to generate power through the power generation unit 400.

At this time, the sixth valve 563 and the eighth valve 566 of a corresponding one of the compressed air forming tanks 200 are opened so that compressed air is supplied through the first air supply part 561.

The fifth power generation step (S25) is a step at which the surface of the seawater is raised as the tide rises with the result that the vertical movement unit 500 is slowly moved upward according to the change of the surface of the seawater to generate power through the power generation unit 400. At this step, the amount of the compressed air and the seawater in the vertical movement unit 500 remains equal to the amount of the compressed air and the seawater in the vertical movement unit 500 at the final state of the fourth power generation step (S24).

The sixth power generation step (S26) is a step at which the seawater is discharged out of the third space part 553 and the fourth space part 554 by compressed air formed by one of the compressed air forming tanks 200 which has not been operated at high tide with the result buoyancy is generated, and therefore, the vertical movement unit 500 is further moved upward to generate power.

At this time, the sixth valve 563 and the seventh valve 564 of a corresponding one of the compressed air forming tanks 200 are opened so that compressed air is supplied into the third space part 553 and the fourth space part 554 through the second air supply part 562, and therefore, the seawater is discharged out of the third space part 553 and the fourth space part 554 through the openings 555 of the respective space parts.

In the tide power generating method according to the embodiment of the present invention, therefore, power is generated based on the change of the level of the seawater when the tide rises and when the tide falls as at the second power generation step (S22) and the fifth power generation step (S25). In addition, the first power generation step (S21) and the sixth power generation step (S26) are performed at high tide at which the level of the seawater is not fluctuated, and the third power generation step (S23) and the fourth power generation step (S24) are performed at low tide at which the level of the seawater is not fluctuated, thereby achieving continuous power generation.

Furthermore, in the tide power generating method according to the embodiment of the present invention, the first power generation step (S21) to the sixth power generation step (S26) are repeatedly performed using the difference between the rise and fall of the tide, which are permanently repeated, thereby achieving stable and efficient power generation.

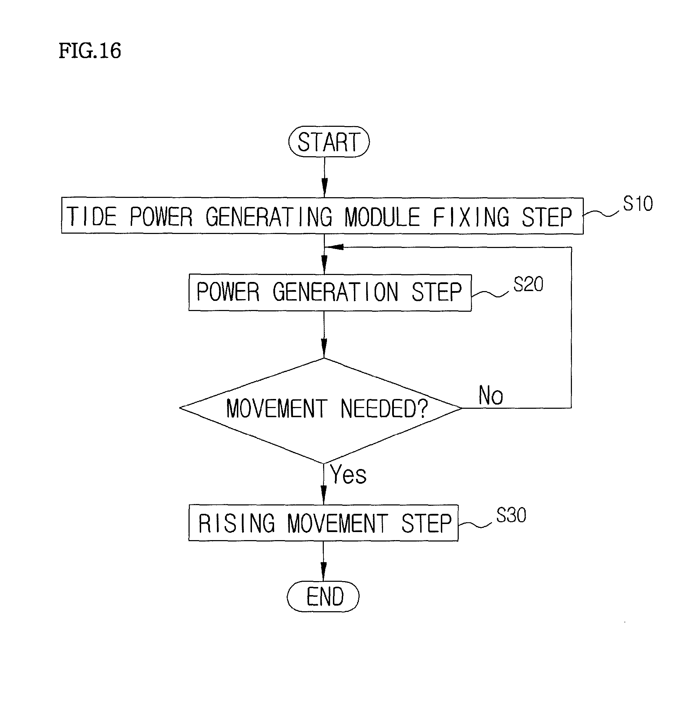

Also, in the tide power generating method according to the embodiment of the present invention, a tide power generating module fixing step (S10) of fixing the tide power generating module 1000 to a proper position is performed before a power generation step (S20) including the first power generation step (S21) to the sixth power generation step (S26) is performed, and a rising movement step (S30) is performed when it is necessary to move the tide power generating module 1000 after the power generation step (S20) is performed, as shown in FIG. 16.

The tide power generating module fixing step (S10) is a step at which seawater is introduced into the lower structures 100 so that the lower structures 100 are moved downward and fixed to the bottom of the sea by the anchors 120 before the power generation step (S20) is performed. In a state in which no seawater is stored in the tide power generating module 1000, i.e. in a state in which the tide power generating module 1000 floats on the seawater, the tide power generating module 1000 is towed to a position where power is to be generated by a towing vessel, and then the lower structures 100 are fixed to the bottom of the sea so that power is smoothly generated by the tide power generating module 1000.

The rising movement step (S30) is a step at which the seawater is discharged out of the seawater ballast tank 130 of each of the lower structures 100 by the discharge pump 141 so that the tide power generating module 1000 rises to the surface of the seawater when it is necessary to move the tide power generating module 1000, such as when it is necessary to change a position where power is to be generated or when the operation of the tide power generating module 1000 is abnormal.

That is, the tide power generating module 1000 rises to the surface of the seawater through the discharge of the seawater and is towed by a towing vessel.

In the tide power generating method according to the embodiment of the present invention as described above, it is possible to move and fix the tide power generating module 1000, which eliminates the necessity of constructing a permanent structure at the bottom of the sea, thereby considerably reducing manufacturing costs and greatly reducing damage to a submarine ecosystem.

Meanwhile, the reason that it is possible to continuously and repeatedly generate power through continuous cyclic circulation of the tide power generating method according to the embodiment of the present invention is that pressure is generated through repeated introduction of seawater into the compressed air forming tanks 200.

That is, at Step S26, compressed air formed in each of the compressed air forming tanks 200, which are independently controlled, is supplied into the third and fourth space parts 553 and 554 just before the tide becomes full due to tidal force caused as the tide rises so that additional rising force is applied to the vertical movement unit 500.

Also, the sixth valve 563 and the seventh valve 564 are closed so that the compressed air does not flow backward between each of the compressed air forming tanks 200, which are independently controlled, and the third and fourth space parts 553 and 554, and the second valve 211 (see FIG. 5A) and the atmospheric air introduction valve 213 (see FIGS. 13A and 13B) are opened so that external air is introduced into each of the compressed air forming tanks 200. Consequently, the introduction of external air is naturally achieved at falling tide. Just before the tide starts to rise after low tide, the second valve 211 for air introduction (see FIGS. 5A and 5B) and the atmospheric air introduction valve 213 (see FIGS. 13A and 13B) are closed so that compressed air is formed in each of the compressed air forming tanks 200 until the tide is full.

Just before the tide is full, the compressed air stored in each of the compressed air forming tanks 200, which are independently controlled, is supplied into the third and fourth space parts 553 and 554 to generate additional rising force.

That is, air is introduced into each of the compressed air forming tanks 200, which are independently controlled, compressed air is formed in each of the compressed air forming tanks 200, the compressed air stored in each of the compressed air forming tanks 200 is supplied into the third and fourth space parts 553 and 554 (at this time, the vertical movement unit 500 rises to the surface of the seawater), external air is reintroduced into each of the compressed air forming tanks 200 at falling tide (at Step S21, the compressed air is discharged from the third and fourth space parts 553 and 554 and seawater is introduced into the third and fourth space parts 553 and 554), and compressed air is independently formed again in each of the compressed air forming tanks 200 at rising tide. Such a cyclic circulation process is continuously carried out.

Next, a continuous cyclic process of forming, using, discharging, introducing and recompressing the compressed air supplied into the first and second space parts 551 and 552 at Step S24 of FIG. 17 will be described.

At the middle point of the platform tide time, at which the level of the seawater is not fluctuated, at low tide after falling tide, the sixth and eighth valves 563 and 566 are opened so that the compressed air stored in each of the compressed air forming tanks 200, which are independently controlled, at high tide is supplied into the first and second space parts 551 and 552 of the vertical movement unit 500. Consequently, the vertical movement unit 500 rises to the surface of the seawater until the tide starts to rise.

Just before the tide starts to rise, the sixth and eighth valves 563 and 566 are closed so that the compressed air does not flow backward from the first and second space parts 551 and 552, and the third valve 221 for seawater introduction and discharge and the second valve 211 for air introduction are opened so that residual seawater remaining in each of the compressed air forming tanks 200, which are independently controlled, at high tide is naturally discharged to the outside.

When the tide starts to rise, the second valve 211 for air introduction is closed, and compressed air is formed in each of the compressed air forming tanks 200, which are independently controlled, until the tide is full.

That is, air is introduced into each of the compressed air forming tanks 200, the air is compressed in each of the compressed air forming tanks 200, the compressed air is stored in each of the compressed air forming tanks 200, the compressed air from each of the compressed air forming tanks 200 is supplied into the first and second space parts 551 and 552, air is reintroduced into each of the compressed air forming tanks 200, and the air is compressed in each of the compressed air forming tanks 200. Such a cyclic circulation process is continuously carried out.

Hereinafter, another example of forming compressed air will be described. Compressed air may be stored in the spherical low-pressure tank 280 until the tide is full as shown in FIG. 13B. Alternatively, as shown in FIG. 13A, compressed air may be stored in the spherical high-pressure tank 240, the third valve 221 for seawater introduction and the atmospheric air introduction valve 213 are opened so that external air is introduced into the atmospheric air storage unit 270 at falling tide and, at the same time, the seawater in each of the compressed air forming tanks 200 is naturally discharged to the outside.

In a state in which the compressed air is stored in the spherical low-pressure and high-pressure tanks 280 and 240, the sixth and eighth valves 563 and 566 are opened to supply the compressed air stored in the spherical low-pressure and high-pressure tanks 280 and 240 into the first and second space parts 551 and 552 of the vertical movement unit 500 at the middle point of the platform tide time, at which the level of the seawater is not fluctuated, at low tide after falling tide so that the vertical movement unit 500 rises to the surface of the seawater until the tide starts to rise. Just after tide starts to rise, the sixth and eighth valves 563 and 566 are closed so that the compressed air in the first and second parts 551 and 552 is prevented to flowing backward.

Also, the atmospheric air introduction valve 213 is closed, and compressed air is formed in the spherical low-pressure and high-pressure tanks 280 and 240, which are independently controlled, until the tide is full after the tide starts to rise. The compressed air formed at high tide is stored in the low-pressure and high-pressure tanks 280 and 240, and the compressed air is supplied into the first and second space parts 551 and 552 of the vertical movement unit 500 at the middle point of the platform tide time, at which the level of the seawater is not fluctuated, at low tide after high tide and falling tide, as previously described, so that the vertical movement unit 500 rises to the surface of the seawater.

Just before the tide starts to rise, the sixth and eighth valves 563 and 566 are closed so that the compressed air does not flow backward from the first and second space parts 551 and 552, and the third valve 221 for seawater introduction and discharge and the atmospheric air introduction valve 213 are opened so that residual seawater remaining in each of the compressed air forming tanks 200, which are independently controlled, at high tide is naturally discharged to the outside.

When the tide starts to rise, the atmospheric air introduction valve 213 is closed, and compressed air is formed in each of the compressed air forming tanks 200, which are independently controlled, until the tide is full.

That is, air is introduced into each of the compressed air forming tanks 200, which are independently controlled, the air is compressed in each of the compressed air forming tanks 200, the compressed air is stored in each of the compressed air forming tanks 200, the compressed air from each of the compressed air forming tanks 200 is supplied into the first and second space parts 551 and 552, air is reintroduced into each of the compressed air forming tanks 200, and compressed air is formed in each of the compressed air forming tanks 200. Such a cyclic circulation process is continuously carried out.

Although the preferred embodiments of the present invention have been disclosed as described above, it is obvious that the construction of the tidal power generating module according to the present invention may be variously modified by those skilled in the art.

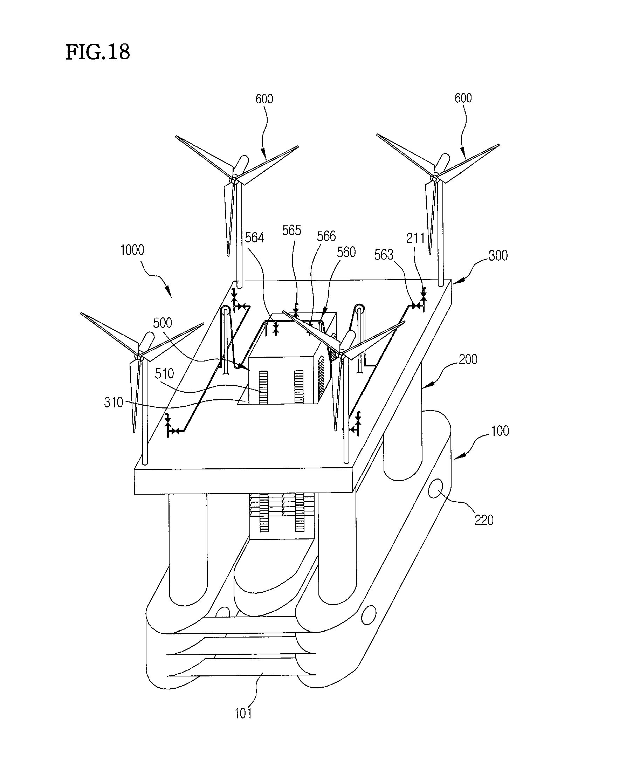

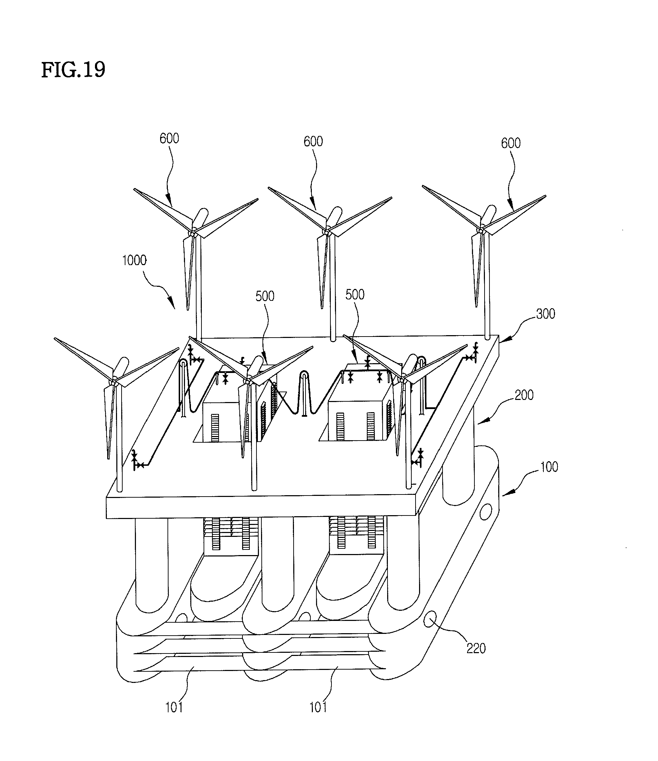

For example, as shown in FIG. 18 or 19, a wind power generation unit 600 may be further installed at the top of the upper structure 300 of the tidal power generating module 1000 according to the present invention to generate power simultaneously using tidal force and marine wind force.

Therefore, such modifications should not be understood individually from technical concept or scope of the present invention, and such modifications should be included in the accompanying claims.

As is apparent from the above description, the present invention has the effect of economically and stably generating power using tidal force, which is a permanent energy source.

In particular, the present invention has the effect of continuously generating power using compressed air and weight of seawater even at high tide and low tide at which the level of the seawater is not fluctuated in addition to the vertical movement of a vertical movement unit due to the rise and fall of the tide.

Also, according to the present invention, the tidal power generating module is not permanently constructed on the sea but is moved and fixed to a position where tidal power generation is possible so as to generate power, and rises to the surface of the sea and is moved when tidal power generation is not necessary, whereby it is possible to reduce initial construction costs of the tidal power generating module and to greatly reduce damage to a submarine ecosystem.

## Claims

1. A tidal power generating module comprising:
a vertical movement unit (500) configured to be moved vertically and
a power generation unit (400) provided to convert vertical movement of the vertical movement unit (500) into rotational motion so as to generate power,
**characterized by**
at least two lower structures (100) spaced apart from each other by a predetermined distance, the lower structures (100) being connected to each other via connection members (101), each of the lower structures (100) being provided at the bottom thereof with an anchor (120) to fix each of the lower structures (100) to the bottom of the sea, each of the lower structures (100) being configured to store seawater therein or to discharge the seawater therefrom;
a plurality of compressed air forming tanks (200), each of which is provided at the upper part of a corresponding one of the lower structures (100) in the shape of a column, each of the compressed air forming tanks (200) being provided at the upper side thereof with an air introduction and discharge unit (160), through which air is introduced and discharged, each of the compressed air forming tanks (200) being provided at the lower side thereof with an a seawater introduction and discharge unit (220), through which seawater is introduced and discharged, the compressed air forming tanks (200) being configured to be individually operated;
an upper structure (300) provided at the upper part of the compressed air forming tanks (200), the upper structure (300) having a hollow part (310) formed in the center region thereof;
wherein the vertical movement unit (500) is configured to be moved vertically by a hollow part (310) of the upper structure (300), the vertical movement unit (500) being provided at the upper part thereof with an air supply unit (560) to supply compressed air from each of the compressed air forming tanks (200) to the vertical movement unit (500), the vertical movement unit (500) being provided at the lower part thereof with a plurality of space parts (551, 552, 553, 554) to store air supplied through the air supply unit (560), each of the space parts (551, 552, 553, 554) being provided at the bottom thereof with an opening (555) through which seawater is introduced into each of the space parts (551, 552, 553, 554); and
the power generation unit (400) is provided at the upper structure (300).

2. The tidal power generating module according to claim 1, wherein the vertical movement unit (500) comprises:
a plurality of seawater movement parts (540) provided above the space parts (551, 552, 553, 554) in a state in which communication spaces of the seawater movement parts (540) are stacked so that seawater flows through the communication spaces;
an air storage part (530) to store air so as to provide a predetermined level of buoyancy to the lower side of a seawater storage part (520) provided above the air storage part (530);
a communication hole (521) for seawater introduction provided at the upper part of a wall of the seawater storage part (520);
a valve (522) for seawater discharge provided at the lower part of the wall of the seawater storage part (520); and
a height forming part (510) provided above the seawater storage part (520), the height forming part (510) having a predetermined height so as to continuously communicate with external air,
the seawater movement parts (540), the air storage part (530), the seawater storage part (520) and the height forming part (510) being integrally formed.

3. The tidal power generating module according to claim 2, wherein each of the compressed air forming tanks (200) is provided with a seawater supply part (230) to supply seawater into the seawater storage part (520) of the vertical movement unit (500) through the communication hole (521).

4. The tidal power generating module according to claim 2, wherein
the space parts comprise a first space part (551) provided below the seawater movement parts (540), a second space part (552) provided below the first space part (551) so as to communicate with the first space part (551), and a third space part (553) and a fourth space part (554) horizontally provided at opposite sides of the second space part (552),
the openings (555) are formed at the bottom of the second space part (552), the bottom of the third space part (553) and the bottom of the fourth space part (554), respectively, and
the air supply unit (560) comprises a first air supply part (561) to supply compressed air from each of the compressed air forming tanks (200) to the first space part (551) and the second space part (552), a second air supply part (562) to supply the compressed air to the third space part (553) and the fourth space part (554), a valve (564) to open and close a flow channel of the first air supply part (561), and a valve (566) to open and close a flow channel of the second air supply part (562).

5. The tidal power generating module according to claim 4, wherein the air supply unit (560) further comprises
a valve (563) provided at the air introduction and discharge unit (160) disposed at the upper side of each of the compressed air forming tanks (200) to open and close air supply channels to the first air supply part (561) and the second air supply part (562), and
a discharge valve (565) to discharge air in the space parts (551, 552, 553, 554) to the outside.

6. The tidal power generating module according to claim 1, wherein each of the lower structures (100) comprises a seawater ballast tank (130) to store seawater, a transfer unit (150) to transfer seawater from the seawater ballast tank (130) so that the seawater is discharged to the outside, and a discharge pump (141) to forcibly discharge seawater stored in the seawater ballast tank (130) to the outside.

7. The tidal power generating module according to claim 1, wherein each of the compressed air forming tanks (200) comprises:
a high-pressure tank (240) provided independently in each of the compressed air forming tanks (200) at the upper side thereof;
a cylinder (250) provided below the high-pressure tank (240), the cylinder (250) comprising a first control valve (251) to control communication with the high-pressure tank (240) and a second control valve (252) to control communication with the interior of each of the compressed air forming tanks (200); and
a multi-stage piston (260) comprising a first movement part (261) configured to be moved vertically according to the introduction and discharge of seawater into and from each of the compressed air forming tanks (200), a rod (263) extending from the center of the first movement part so that the rod (263) has a predetermined height, and a second movement part (262) provided above the rod (263), the second movement (262) part having a smaller area than the first movement part (261), the second movement part (262) being disposed in the cylinder (250).

8. The tidal power generating module according to claim 1, wherein the vertical movement unit (500) is provided at the side wall thereof with rack gear (501), and the power generation unit (400) comprises a compression type pinion gear (470) rotatably engaged with the rack gear (01).

9. The tidal power generating module according to claim 8, wherein the power generation unit (400) is configured so that rotational force of the pinion gear (470) is transmitted to a generator (410) via a gearbox (420), a pulley belt (430), a first flywheel (440), a rotational direction conversion type clutch (450) and a second flywheel (460) so as to generate power at the generator (410).

10. The tidal power generating module according to claim 1, further comprising idle rollers (311) provided at the inside of the hollow part (310) of the upper structure (300) contacting the vertical movement unit (500) to guide vertical movement of the vertical movement unit (500).

11. The tidal power generating module according to claim 1, wherein each of the compressed air forming tanks (200) has a low-pressure tank (280) independently provided therein at the upper side thereof.

12. The tidal power generating module according to claim 1, further comprising a wind power generation unit (600) provided at the top of the upper structure (300) of the tidal power generating module to use marine wind force.

13. A tidal power generating method using a tidal power generating module according to claim 5, the tidal power generating method comprising:
a first power generation step at which the valve (563) provided at the air introduction and discharge unit (160) is closed at high tide, and a valve (564) and a discharge valve (565) are opened to discharge compressed air in a third space part (553) and a fourth space part (554) to the outside through a second air supply part (562) so that seawater is introduced into the third space part (553) and the fourth space part (554) through openings (555), whereby a vertical movement unit (500) is moved downward and power is generated by a power generation unit (400);
a second power generation step at which the surface of the seawater is lowered as the tide falls, whereby the vertical movement unit (500) is further moved downward to generate power;
a third power generation step at which the valve (563) provided at the air introduction and discharge unit (160) is closed at low tide, a valve (566) and the discharge valve (565) are opened to discharge compressed air in a first space part (551) and a second space part (552) to the outside through a first air supply part (561) so that seawater is introduced into the first space part (551) and the second space part (552) through openings (555), and, at the same time, a valve (231) of a seawater supply part (230) of at least one compressed air forming tank (200) is opened so that seawater stored in the compressed air forming tank to a predetermined level is supplied into a seawater storage part (520) through a communication hole (521) so as to further move the vertical movement unit (500) downward;
a fourth power generation step at which compressed air from another compressed air forming tank (200) is supplied to the first space part (551) and the second space part (552) so that buoyancy is generated in the first space part (551) and the second space part (552) and, at the same time, a valve (522) of the seawater storage part (520) is opened to discharge seawater out of the seawater storage part (520), whereby the vertical movement unit (500) is moved upward due to weight reduction to generate power;
a fifth power generation step at which the surface of the seawater is raised as the tide rises, whereby the vertical movement unit (500) is moved upward to generate power;
a sixth power generation step at which compressed air from another compressed air forming tank (200) is supplied into the third space part (553) and the fourth space part (554), whereby the vertical movement unit (500) is further moved upward to generate power due to increase of internal buoyancy.

14. The tidal power generating method according to claim 13, wherein the fourth power generation step comprises opening the valve (563) provided at the air introduction and discharge unit (160) and the valve (566) of the corresponding compressed air forming tank (200) to supply the compressed air into the first space part (551) and the second space part (552) through the first air supply part (561) in a state in which the valve (564) and the discharge valve (565) are closed.

15. The tidal power generating method according to claim 13, wherein the sixth power generation step comprises opening the valve (563) provided at the air introduction and discharge unit (160) and the valve (564) of the corresponding compressed air forming tank (200) to supply the compressed air into the third space part (553) and the fourth space part (554) through the second air supply part (562).

16. The tidal power generating method according to any one of claims 13 to 15, further comprising:
a tide power generating module fixing step at which seawater is introduced into lower structures (100) so that the lower structures (100) are moved downward and fixed to the bottom of the sea by anchors (120), the tide power generating module fixing step being performed before the first power generation step to the sixth power generation step are performed; and
a rising movement step at which seawater is discharged out of a seawater ballast tank (130) using a transfer unit (150) and a discharge pump (141) disposed in a pump compartment of each of the lower structures (100) so that the tide power generating module rises to the surface of the seawater when it is necessary to move the tide power generating module.

## Patentansprüche

1. Gezeitenstromerzeugungsmodul mit
einer Vertikalbewegungseinheit (500) die dazu ausgebildet ist, vertikal bewegt zu werden, und
einer Stromerzeugungseinheit (400), die für die Umwandlung einer vertikalen Bewegung der Vertikalbewegungseinheit (500) in eine Drehbewegung zur Erzeugung von Strom vorgesehen ist,
**gekennzeichnet durch**
wenigstens zwei untere Aufbauten (100), die um einen vorbestimmten Abstand voneinander beabstandet sind, wobei die unteren Aufbauten (100) über Verbindungselemente (101) miteinander verbunden sind, wobei jeder der unteren Aufbauten (100) an seinem Boden mit einem Anker (120) versehen ist, um jeden der unteren Aufbauten (100) am Meeresgrund zu fixieren, wobei jeder der unteren Aufbauten (100) so ausgebildet ist, dass darin Meerwasser gespeichert oder das Meerwasser aus ihm abgeführt wird,
eine Vielzahl von Druckluftbildungsbehältern (200), von denen jeder am oberen Teil eines entsprechenden unteren Aufbaus (100) in Form einer Säule vorgesehen ist, wobei jeder der Druckluftbildungsbehälter (200) an seiner Oberseite mit einer Luftzuführ- und -abführeinheit (160) versehen ist, **durch** die Luft zu- und abgeführt wird, wobei jeder der Druckluftbildungsbehälter (200) an seiner unteren Seite mit einer Meerwasserzuführ- und -abführeinheit (220) versehen ist, **durch** die Meerwasser zugeführt und abgeführt wird, wobei die Druckluftbildungsbehälter (200) so ausgebildet sind, dass sie individuell betätigt werden können,
einen oberen Aufbau (300), der am oberen Teil der Druckluftbildungsbehälter (200) vorgesehen ist, wobei der obere Aufbau (300) einen in seinem Mittelbereich ausgebildeten hohlen Teil (310) aufweist,
wobei die Vertikalbewegungseinheit (500) so ausgebildet ist, dass sie **durch** den hohlen Teil (310) des oberen Aufbaus (300) bewegt wird, wobei die Vertikalbewegungseinheit (500) an ihrem oberen Teil mit einer Luftzuführeinheit (560) versehen ist, um der Vertikalbewegungseinheit (500) Druckluft von jedem der Druckluftbildungsbehälter (200) zuzuführen, wobei die Vertikalbewegungseinheit (500) an ihrem unteren Teil mit einer Vielzahl von Raumteilen (551, 552, 553, 554) zur Speicherung von **durch** die Luftzuführeinheit (560) zugeführter Luft versehen ist, wobei jeder der Raumteile (551, 552, 553, 554) an seinem Boden mit einer Öffnung (555) versehen ist, **durch** die Meerwasser in jeden der Raumteile (551, 552, 553, 554) eingeführt wird, und
die Stromerzeugungseinheit (400) an dem oberen Aufbau (300) vorgesehen ist.

2. Gezeitenstromerzeugungsmodul nach Anspruch 1, bei welchem die Vertikalbewegungseinheit (500)
eine Vielzahl von Meerwasserbewegungsteilen (540), die über den Raumteilen (551, 552, 553, 554) in einem Zustand vorgesehen sind, in dem Verbindungsräume der Meerwasserbewegungsteile (540) in einem Stapel angeordnet sind, so dass Meerwasser durch die Verbindungsräume fließt,
einen Luftspeicherteil (530) zur Speicherung von Luft, um einen vorbestimmten Auftriebspegel für die Unterseite eines über dem Luftspeicherteil (530) vorgesehenen Meerwasserspeicherteils (520) bereitzustellen,
ein Verbindungsloch (521) zum Einführen von Meerwasser, das an dem oberen Teil einer Wand des Meerwasserspeicherteils (520) vorgesehen ist,
ein Ventil (522) zum Abführen von Meerwasser, das an dem unteren Teil der Wand des Meerwasserspeicherteils (520) vorgesehen ist, und
einen Höhenbildungsteil (510) aufweist, der über dem Meerwasserspeicherteil (520) vorgesehen ist, wobei der Höhenbildungsteil (510) eine vorbestimmte Höhe hat, so dass er kontinuierlich mit Außenluft in Verbindung steht, wobei die Meerwasserbewegungsteile (540), der Luftspeicherteil (530), der Meerwasserspeicherteil (520) und der Höhenbildungsteil (510) einstückig ausgebildet sind.

3. Gezeitenstromerzeugungsmodul nach Anspruch 2, bei welchem jeder der Druckluftbildungsbehälter (200) mit einem Meerwasserzuführteil (230) zum Zuführen von Meerwasser durch das Verbindungsloch (521) in den Meerwasserspeicherteil (520) der Vertikalbewegungseinheit (500) versehen ist.

4. Gezeitenstromerzeugungsmodul nach Anspruch 2, bei welchem die Raumteile einen ersten Raumteil (551), der unter den Meerwasserbewegungsteilen (540) vorgesehen ist, einen zweiten Raumteil (552), der so unter dem ersten Raumteil (551) vorgesehen ist, dass er mit dem ersten Raumteil (551) in Verbindung steht, und einen dritten Raumteil (553) und einen vierten Raumteil (554) umfassen, die auf gegenüberliegenden Seiten des zweiten Raumteils (552) vorgesehen sind,
die Öffnungen (555) im Boden des zweiten Raumteils (552), im Boden des dritten Raumteils (553) bzw. im Boden des vierten Raumteils (554) ausgebildet sind, und
die Luftzuführeinheit (560) einen ersten Luftzuführteil (561) zum Zuführen von Druckluft von jedem der Druckluftbildungsbehälter (200) zu dem ersten Raumteil (551) und dem zweiten Raumteil (552), einen zweiten Luftzuführteil (562) zum Zuführen von Druckluft zu dem dritten Raumteil (553) und dem vierten Raumteil (554), ein Ventil (564) zum Öffnen und Schließen eines Strömungskanals des ersten Luftzuführteils (561) und ein Ventil (566) zum Öffnen und Schließen eines Strömungskanals des zweiten Luftzuführteils (562) aufweist.

5. Gezeitenstromerzeugungsmodul nach Anspruch 4, bei welchem die Luftzuführeinheit (560) weiterhin
ein Ventil (563), das an der an der Oberseite jedes der Druckluftbildungsbehälter (200) angeordneten Luftzuführ- und -abführeinheit (160) zum Öffnen und Schließen von Luftzuführkanälen zu dem ersten Luftzuführteil (561) und dem zweiten Luftzuführteil (562) vorgesehen ist, und
ein Abführventil (565) zum Abführen von Luft aus den Raumteilen (551, 552, 553, 554) nach außen aufweist.

6. Gezeitenstromerzeugungsmodul nach Anspruch 1, bei welchem jeder der unteren Aufbauten (100) einen Meerwasserballasttank (130) zur Speicherung von Meerwasser, eine Überführungseinheit (150) zum Überführen von Meerwasser aus dem Meerwasserballasttank (130), so dass das Meerwasser nach außen abgeführt wird, und eine Abführpumpe (141) zum zwangsweisen Abführen von in dem Meerwasserballasttank (130) gespeichertem Meerwasser nach außen aufweist.

7. Gezeitenstromerzeugungsmodul nach Anspruch 1, bei welchem jeder Druckluftbildungsbehälter (200)
einen Hochdruckbehälter (240), der unabhängig in jedem der Druckluftbildungsbehälter (200) an dessen Oberseite vorgesehen ist,
einen Zylinder (250), der unter dem Hochdruckbehälter (240) vorgesehen ist, wobei der Zylinder (250) ein erstes Steuerventil (251) zum Steuern der Verbindung mit dem Hochdruckbehälter (240) und ein zweites Steuerventil (252) zum Steuern der Verbindung mit dem Inneren jedes der Druckluftbildungsbehälter (200) aufweist, und
einen mehrstufigen Kolben (260) aufweist, der einen ersten Bewegungsteil (261), der für eine vertikale Bewegung gemäß dem Zuführen und Abführen von Meerwasser zu und aus jedem der Druckluftbildungsbehälter (200) ausgebildet ist, eine Stange (263), die sich vom Zentrum des ersten Bewegungsteils aus derart erstreckt, dass die Stange (263) eine vorbestimmte Höhe hat, und einen zweiten Bewegungsteil (262) aufweist, der über der Stange (263) vorgesehen ist, wobei der zweite Bewegungsteil (262) einen kleineren Bereich als der erste Bewegungsteil (261) hat, wobei der zweite Bewegungsteil (262) in dem Zylinder (250) angeordnet ist.

8. Gezeitenstromerzeugungsmodul nach Anspruch 1, bei welchem die Vertikalbewegungseinheit (500) an ihrer Seitenwand mit einer Zahnstange (501) versehen ist, und die Stromerzeugungseinheit (400) ein Ritzel (470) in Kompressionsbauweise aufweist, das mit der Zahnstange (501) drehbar in Eingriff steht.

9. Gezeitenstromerzeugungsmodul nach Anspruch 8, bei welchem die Stromerzeugungseinheit (400) derart ausgebildet ist, dass die Drehkraft des Ritzels (470) über ein Getriebe (420), eine Riemenscheibe (430), ein erstes Schwungrad (440), eine Kupplung (450) in Drehrichtungsumwandlungs-Bauweise und ein zweites Schwungrad (460) auf einen Generator (410) zur Erzeugung von Strom in dem Generator (410) übertragen wird.

10. Gezeitenstromerzeugungsmodul nach Anspruch 1, welches weiterhin leerlaufende Rollen (311) aufweist, die an der Innenseite des hohlen Teils (310) des oberen Aufbaus (300) vorgesehen sind und die Vertikalbewegungseinheit (500) zur Führung der vertikalen Bewegung der Vertikalbewegungseinheit (500) kontaktieren.

11. Gezeitenstromerzeugungsmodul nach Anspruch 1, bei welchem jeder der Druckluftbildungsbehälter (200) einen Niedrigdruckbehälter (280) aufweist, der unabhängig davon an seiner oberen Seite vorgesehen ist.

12. Gezeitenstromerzeugungsmodul nach Anspruch 1, welches weiterhin eine Windstromerzeugungseinheit (600) aufweist, die oben auf dem oberen Aufbau (300) des Gezeitenstromerzeugungsmoduls zur Nutzung der Meerwindkraft vorgesehen ist.

13. Gezeitenstromerzeugungsverfahren unter Verwendung eines Gezeitenstromerzeugungsmoduls nach Anspruch 5, wobei das Gezeitenstromerzeugungsverfahren umfasst:
einen ersten Stromerzeugungsschritt, bei dem das an der Luftzuführ- und -abführeinheit (160) vorgesehene Ventil (563) bei Flut geschlossen wird, und ein Ventil (564) und ein Abführventil (565) geöffnet werden, um Druckluft aus einem dritten Raumteil (553) und einem vierten Raumteil (554) durch einen zweiten Luftzuführteil (562) nach außen abzuführen, so dass Meerwasser durch die Öffnungen (555) in den dritten Raumteil (553) und den vierten Raumteil (554) eingeführt wird, wobei eine Vertikalbewegungseinheit (500) nach unten bewegt und durch eine Stromerzeugungseinheit (400) Strom erzeugt wird,
einen zweiten Stromerzeugungsschritt, bei dem mit dem Sinken der Gezeiten der Meerwasserspiegel sinkt, wodurch die Vertikalbewegungseinheit (500) zur Erzeugung von Strom weiter nach unten bewegt wird,
einen dritten Stromerzeugungsschritt, bei dem das an der Luftzuführ- und -abführeinheit (160) vorgesehene Ventil (563) bei Ebbe geschlossen wird, und ein Ventil (566) und das Abführventil (565) geöffnet werden, um Druckluft aus einem ersten Raumteil (551) und einem zweiten Raumteil (552) durch einen ersten Luftzuführteil (561) nach außen abzuführen, so dass Meerwasser durch die Öffnungen (555) in den ersten Raumteil (551) und den zweiten Raumteil (552) eingeführt wird und gleichzeitig ein Ventil (231) eines Meerwasserzuführteils (230) wenigstens eines Druckluftbildungsbehälters (200) geöffnet wird, so dass Meerwasser, das bis zu einem vorbestimmten Niveau in dem Druckluftbildungsbehälter gespeichert wird, einem Meerwasserspeicherteil (520) durch ein Verbindungsloch (521) zugeführt wird, so dass die Vertikalbewegungseinheit (500) weiter nach unten bewegt wird,
einen vierten Stromerzeugungsschritt, bei dem Druckluft aus einem anderen Druckluftbildungsbehälter (200) dem ersten Raumteil (551) und dem zweiten Raumteil (552) zugeführt wird, so dass in dem ersten Raumteil (551) und dem zweiten Raumteil (552) ein Auftrieb erzeugt wird, und gleichzeitig ein Ventil (522) des Meerwasserspeicherteils (520) geöffnet wird, um Meerwasser aus dem Meerwasserspeicherteil (520) abzuführen, wodurch die Vertikalbewegungseinheit (500) aufgrund der Gewichtsreduzierung zur Erzeugung von Strom nach oben bewegt wird,
einen fünften Stromerzeugungsschritt, bei dem mit dem Anstieg der Gezeiten der Meerwasserspiegel steigt, wodurch die Vertikalbewegungseinheit (500) zur Erzeugung von Strom weiter nach oben bewegt wird,
einen sechsten Stromerzeugungsschritt, bei dem Druckluft aus einem anderen Druckluftbildungsbehälter (200) dem dritten Raumteil (553) und dem vierten Raumteil (554) zugeführt wird, wodurch die Vertikalbewegungseinheit (500) aufgrund des Anstiegs des inneren Auftriebs zur Erzeugung von Strom nach oben bewegt wird.

14. Gezeitenstromerzeugungsverfahren nach Anspruch 13, bei welchem der vierte Stromerzeugungsschritt das Öffnen des an der Luftzuführ- und -abführeinheit (160) vorgesehenen Ventils und des Ventil (566) des entsprechenden Druckluftbildungsbehälters (200) umfasst, um die Druckluft dem ersten Raumteil (551) und dem zweiten Raumteil (552) durch den ersten Luftzuführteil (561) in einem Zustand zuzuführen, in dem das Ventil (564) und das Abführventil (565) geschlossen sind.

15. Gezeitenstromerzeugungsverfahren nach Anspruch 13, bei welchem der sechste Stromerzeugungsschritt das Öffnen des an der Luftzuführ- und -abführeinheit (160) vorgesehenen Ventils (563) und des Ventils (564) des entsprechenden Druckluftbildungsbehälters (200) umfasst, um die Druckluft dem dritten Raumteil (553) und dem vierten Raumteil (554) durch den zweiten Luftzuführteil (562) zuzuführen.

16. Gezeitenstromerzeugungsverfahren nach irgendeinem der Ansprüche 13 bis 15, welches weiterhin umfasst:
einen Gezeitenstromerzeugungsmodulfixierungsschritt, bei dem Meerwasser in die unteren Aufbauten (100) eingeführt wird, so dass die unteren Aufbauten (100) nach unten bewegt und am Meeresgrund durch Anker (120) fixiert werden, wobei der Gezeitenstromerzeugungsmodulfixierungsschritt durchgeführt wird, bevor der erste bis sechste Stromerzeugungsschritt ausgeführt werden, und
einen Aufstiegsbewegungsschritt, bei dem Meerwasser aus dem Meerwasserballasttank (130) unter Verwendung einer Überführungseinheit (150) und einer Abführpumpe (141), die in einer Pumpenkammer jedes der unteren Aufbauten (100) angeordnet ist, abgeführt wird, so dass das Gezeitenstromerzeugungsmodul an die Meeresoberfläche aufsteigt, wenn es erforderlich ist, das Gezeitenstromerzeugungsmodul zu bewegen.

## Revendications

1. Module de génération d'énergie marémotrice comprenant :
- une unité de déplacement vertical (500) configurée pour être déplacée verticalement, et
- une unité de génération d'énergie (400) prévue pour convertir le mouvement vertical de l'unité de déplacement vertical (500) en un mouvement de rotation, de manière à générer de l'énergie,
**caractérisé par**
au moins deux structures inférieures (100) espacées l'une de l'autre d'une distance prédéterminée, les structures inférieures (100) étant reliées l'une à l'autre par l'intermédiaire d'éléments de liaison (101), chacune des structures inférieures (100) étant pourvue sur la partie inférieure de celles-ci d'une ancre (120) pour fixer chacune des structures inférieures (100) au fond de la mer, chacune des structures inférieures (100) étant configurée pour stocker de l'eau de mer dans celles-ci ou pour évacuer de l'eau de mer à partir de celles-ci ;
une pluralité de réservoirs de formation d'air comprimé (200), dont chacun est situé sur la partie supérieure d'une structure correspondante des structures inférieures (100) sous la forme d'une colonne, chacun des réservoirs de formation d'air comprimé (200) étant pourvu sur le côté supérieur de ceux-ci d'une unité d'introduction et d'évacuation d'air (160), par le biais de laquelle de l'air est introduit et évacué, chacun des réservoirs de formation d'air comprimé (200) étant pourvu sur le côté inférieur de ceux-ci d'une unité d'introduction et d'évacuation d'eau de mer (220), par le biais de laquelle de l'eau de mer est introduite et évacuée, les réservoirs de formation d'air comprimé (200) étant configurés pour être actionnés individuellement ;
une structure supérieure (300) située sur la partie supérieure des réservoirs de formation d'air comprimé (200), la structure supérieure (300) ayant une partie creuse (310) formée dans la région centrale de celle-ci ; dans lequel l'unité de déplacement vertical (500) est configurée pour être déplacée verticalement par une partie creuse (310) de la structure supérieure (300), l'unité de déplacement vertical (500) étant pourvue sur la partie supérieure de celle-ci d'une unité d'alimentation en air (560) pour fournir de l'air comprimé à partir de chacun des réservoirs de formation d'air comprimé (200) à l'unité de déplacement vertical (500), l'unité de déplacement vertical (500) étant pourvue sur la partie inférieure de celle-ci d'une pluralité de parties d'espace (551, 552, 553, 554) pour stocker l'air fourni par le biais de l'unité d'alimentation en air (560), chacune des parties d'espace (551, 552, 553, 554) étant pourvue sur la partie inférieure de celles-ci d'une ouverture (555) à travers laquelle de l'eau de mer est introduite dans chacune des parties d'espace (551, 552, 553, 554) ; et l'unité de génération d'énergie (400) est située sur la structure supérieure (300).

2. Module de génération d'énergie marémotrice selon la revendication 1, dans lequel l'unité de déplacement vertical (500) comprend :
- une pluralité de parties de déplacement d'eau de mer (540) situées au-dessus des parties d'espace (551, 552, 553, 554) dans un état dans lequel les espaces de communication des parties de déplacement d'eau de mer (540) sont empilés de sorte que l'eau de mer circule à travers les espaces de communication ;
- une partie de stockage d'air (530) pour stocker de l'air de manière à fournir un niveau prédéterminé de flottabilité au côté inférieur d'une partie de stockage d'eau de mer (520) située au-dessus de la partie de stockage d'air (530) ;
- un trou de communication (521) pour l'introduction d'eau de mer situé sur la partie supérieure d'une paroi de la partie de stockage d'eau de mer (520) ;
- une vanne (522) pour l'évacuation de l'eau de mer située sur la partie inférieure de la paroi de la partie de stockage d'eau de mer (520) ; et
- une partie de formation de hauteur (510) située au-dessus de la partie de stockage d'eau de mer (520), la partie de formation de hauteur (510) ayant une hauteur prédéterminée de manière à communiquer en continu avec l'air extérieur,
les parties de déplacement d'eau de mer (540), la partie de stockage d'air (530), la partie de stockage d'eau de mer (520) et la partie de formation de hauteur (510) étant formées de manière solidaire.

3. Module de génération d'énergie marémotrice selon la revendication 2, dans lequel chacun des réservoirs de formation d'air comprimé (200) est pourvu d'une partie d'alimentation en eau de mer (230) pour introduire de l'eau de mer dans la partie de stockage d'eau de mer (520) de l'unité de déplacement vertical (500) à travers le trou de communication (521).

4. Module de génération d'énergie marémotrice selon la revendication 2, dans lequel
les parties d'espace comprennent une première partie d'espace (551) située sous les parties de déplacement d'eau de mer (540), une deuxième partie d'espace (552) située sous la première partie d'espace (551) de manière à communiquer avec la première partie d'espace (551), et une troisième partie d'espace (553) et une quatrième partie d'espace (554) situées horizontalement sur des côtés opposés de la deuxième partie d'espace (552),
les ouvertures (555) sont formées en bas de la deuxième partie d'espace (552), en bas de la troisième partie d'espace (553) et en bas de la quatrième partie d'espace (554), respectivement, et
l'unité d'alimentation en air (560) comprend une première partie d'alimentation en air (561) pour fournir de l'air comprimé à partir de chacun des réservoirs de formation d'air comprimé (200) à la première partie d'espace (551) et à la deuxième partie d'espace (552), une seconde partie d'alimentation en air (562) pour fournir de l'air comprimé à la troisième partie d'espace (553) et à la quatrième partie d'espace (554), une vanne (564) pour ouvrir et fermer un canal de circulation de la première partie d'alimentation en air (561), et une vanne (566) pour ouvrir et fermer un canal de circulation de la seconde partie d'alimentation en air (562).

5. Module de génération d'énergie marémotrice selon la revendication 4, dans lequel l'unité d'alimentation en air (560) comprend en outre :
- une vanne (563) située sur l'unité d'introduction et d'évacuation d'air (160) disposée sur le côté supérieur de chacun des réservoirs de formation d'air comprimé (200) pour ouvrir et fermer des canaux d'alimentation en air vers la première partie d'alimentation en air (561) et la seconde partie d'alimentation en air (562), et
- une vanne d'évacuation (565) pour évacuer l'air présent dans les parties d'espace (551, 552, 553, 554) vers l'extérieur.

6. Module de génération d'énergie marémotrice selon la revendication 1, dans lequel chacune des structures inférieures (100) comprend un réservoir de ballast d'eau de mer (130) pour stocker de l'eau de mer, une unité de transfert (150) pour transférer l'eau de mer provenant du réservoir de ballast d'eau de mer (130) de sorte que l'eau de mer est évacuée vers l'extérieur, et une pompe d'évacuation (141) pour évacuer de force l'eau de mer stockée dans le réservoir de ballast d'eau de mer (130) vers l'extérieur.

7. Module de génération d'énergie marémotrice selon la revendication 1, dans lequel chacun des réservoirs de formation d'air comprimé (200) comprend :
- un réservoir à haute pression (240) situé de façon indépendante dans chacun des réservoirs de formation d'air (200) sur le côté supérieur de ceux-ci ;
- un cylindre (250) situé sous le réservoir à haute pression (240), le cylindre (250) comprenant une première vanne de commande (251) pour commander la communication avec le réservoir à haute pression (240) et une seconde vanne de commande (252) pour commander la communication avec l'intérieur de chacun des réservoirs de formation d'air comprimé (200) ; et
- un piston multi-étagé (260) comprenant une première partie de déplacement (261) configurée pour être déplacée verticalement en fonction de l'introduction et de l'évacuation d'eau de mer dans et de chacun des réservoirs de formation d'air comprimé (200), une tige (263) s'étendant à partir du centre de la première partie de déplacement, de sorte que la tige (263) a une hauteur prédéterminée, et une seconde partie de déplacement (262) située au-dessus de la tige (263), la seconde partie de déplacement (262) ayant une surface inférieure à la première partie de déplacement (261), la seconde partie de déplacement (262) étant disposée dans le cylindre (250).

8. Module de génération d'énergie marémotrice selon la revendication 1, dans lequel l'unité de déplacement vertical (500) est pourvue sur la paroi latérale de celle-ci d'un engrenage à crémaillère (501), et l'unité de génération d'énergie (400) comprend une roue d'engrenage du type à compression (470) mise en prise en rotation avec l'engrenage à crémaillère (501).

9. Module de génération d'énergie marémotrice selon la revendication 8, dans lequel l'unité de génération d'énergie (400) est configurée de telle sorte que la force de rotation de la roue d'engrenage (470) est transmise à un générateur (410) par l'intermédiaire d'une boîte à engrenages (420), d'une courroie de poulie (430), d'un premier volant d'inertie (440), d'un embrayage de type conversion de sens de rotation (450) et d'un second volant d'inertie (460), de façon à générer de l'énergie au niveau du générateur (410).

10. Module de génération d'énergie marémotrice selon la revendication 1, comprenant en outre des rouleaux fous (311) situés à l'intérieur de la partie creuse (310) de la structure supérieure (300), en contact avec l'unité de déplacement vertical (500) pour guider le mouvement vertical de l'unité de déplacement vertical (500).

11. Module de génération d'énergie marémotrice selon la revendication 1, dans lequel chacun des réservoirs de formation d'air comprimé (200) possède un réservoir à basse pression (280) situé de façon indépendante dans ceux-ci sur le côté supérieur de ceux-ci.

12. Module de génération d'énergie marémotrice selon la revendication 1, comprenant en outre une unité de génération d'énergie éolienne (600) située au sommet de la structure supérieure (300) du module de génération d'énergie marémotrice pour utiliser la force du vent marin.

13. Procédé de génération d'énergie marémotrice en utilisant un module de génération d'énergie marémotrice selon la revendication 5, le procédé de génération d'énergie marémotrice comprenant :
- une première étape de génération d'énergie au cours de laquelle la vanne (563) située sur l'unité d'introduction et d'évacuation d'air (160) est fermée à marée haute, et une vanne (564) et une vanne d'évacuation (565) sont ouvertes pour évacuer l'air comprimé présent dans une troisième partie d'espace (553) et une quatrième partie d'espace (554) vers l'extérieur par le biais d'une seconde partie d'alimentation en air (562), de sorte que de l'eau de mer est introduite dans la troisième partie d'espace (553) et la quatrième partie d'espace (554) par le biais des ouvertures (555), moyennant quoi une unité de déplacement vertical (500) est déplacée vers le bas et de l'énergie est générée par une unité de génération d'énergie (400) ;
- une seconde étape de génération d'énergie au cours de laquelle la surface de l'eau de mer est abaissée à mesure que la marée descend, moyennant quoi l'unité de déplacement vertical (500) est déplacée en outre vers le bas pour produire de l'énergie ;
- une troisième étape de génération d'énergie au cours de laquelle la vanne (563) située sur l'unité d'introduction et d'évacuation d'air (160) est fermée à marée basse, une vanne (566) et la vanne d'évacuation (565) sont ouvertes pour évacuer l'air comprimé présent dans une première partie d'espace (551) et une deuxième partie d'espace (552) vers l'extérieur par le biais d'une première partie d'alimentation en air (561) de sorte que de l'eau de mer est introduite dans la première partie d'espace (551) et la deuxième partie d'espace (552) par le biais des ouvertures (555), et, en même temps, une vanne (231) d'une partie d'alimentation en eau de mer (230) d'au moins un réservoir de formation d'air comprimé (200) est ouverte de sorte que l'eau de mer stockée dans le réservoir de formation d'air comprimé à un niveau prédéterminé est introduite dans une partie de stockage d'eau de mer (520) par le biais d'un trou de communication (521) de manière à déplacer en outre l'unité de déplacement vertical (500) vers le bas ;
- une quatrième étape de génération d'énergie au cours de laquelle de l'air comprimé provenant d'un autre réservoir de formation d'air comprimé (200) est introduit dans la première partie d'espace (551) et la deuxième partie d'espace (552) de sorte qu'une flottabilité est générée dans la première partie d'espace (551) et la deuxième partie d'espace (552) et, en même temps, une vanne (522) de la partie de stockage d'eau de mer (520) est ouverte pour évacuer l'eau de mer hors de la partie de stockage d'eau de mer (520), moyennant quoi l'unité de déplacement vertical (500) est déplacée vers le haut en raison de la réduction de poids pour produire de l'énergie ;
- une cinquième étape de génération d'énergie au cours de laquelle la surface de l'eau de mer est relevée à mesure que la marée monte, moyennant quoi l'unité de déplacement vertical (500) est déplacée vers le haut pour produire de l'énergie ;
- une sixième étape de génération d'énergie au cours de laquelle de l'air comprimé provenant d'un autre réservoir de formation d'air comprimé (200) est introduit dans la troisième partie d'espace (553) et la quatrième partie d'espace (554), moyennant quoi l'unité de déplacement vertical (500) est déplacée en outre vers le haut pour produire de l'énergie en raison de l'augmentation de la flottabilité interne.

14. Procédé de génération d'énergie marémotrice selon la revendication 13, dans lequel la quatrième étape de génération d'énergie comprend ouvrir la vanne (563) située sur l'unité d'introduction et d'évacuation d'air (160) et la vanne (566) du réservoir de formation d'air comprimé (200) correspondant pour introduire de l'air comprimé dans la première partie d'espace (551) et la deuxième partie d'espace (552) par le biais de la première partie d'alimentation en air (561) dans un état dans lequel la vanne (564) et la vanne d'évacuation (565) sont fermées.

15. Procédé de génération d'énergie marémotrice selon la revendication 13, dans lequel la sixième étape de génération d'énergie comprend ouvrir la vanne (563) située sur l'unité d'introduction et d'évacuation d'air (160) et la vanne (564) du réservoir de formation d'air comprimé (200) correspondant pour introduire de l'air comprimé dans la troisième partie d'espace (553) et la quatrième partie d'espace (554) par le biais de la seconde partie d'alimentation en air (562).

16. Procédé de génération d'énergie marémotrice selon l'une quelconque des revendications 13 à 15, comprenant en outre :
- une étape de fixation du module génération d'énergie marémotrice au cours de laquelle de l'eau de mer est introduite dans les structures inférieures (100), de sorte que les structures inférieures (100) sont déplacées vers le bas et fixées au fond de la mer par des ancres (120), l'étape de fixation du module de génération d'énergie marémotrice étant exécutée avant que les étapes de génération d'énergie de 1 à 6 ne soient exécutées ; et
- une étape de mouvement ascendant au cours de laquelle de l'eau de mer est évacuée hors d'un réservoir de ballast d'eau de mer (130) en utilisant une unité de transfert (150) et une pompe d'évacuation (141) disposées dans un compartiment de pompe de chacune des structures inférieures (100), de sorte que le module de génération d'énergie marémotrice monte à la surface de l'eau de mer lorsqu'il est nécessaire de déplacer le module de génération d'énergie marémotrice.
